# EUROPÄISCHE PATENTSCHRIFT

(11) **EP 1 444 637 B1**
(45) Veröffentlichungstag und Bekanntmachung des Hinweises auf die Patenterteilung: **08.03.2006**
(21) Anmeldenummer: 02791578.4
(22) Anmeldetag: 15.11.2002
(51) Int. Cl.: G06K 7/00

(54) **KONTAKTIEREINRICHTUNG UND LESEEINHEIT FÜR KARTENFÖRMIGE INFORAMTIONSTRÄGER**
CONTACTING SYSTEM AND READING UNIT FOR CARD-SHAPED INFORMATION CARRIERS
SYSTEME DE CONTACT ET UNITE DE LECTURE POUR SUPPORTS D'INFORMATIONS EN FORME DE CARTES

(30) Priorität: 16.11.2001 AT 18032001
(43) Veröffentlichungstag der Anmeldung: 11.08.2004
(73) Patentinhaber: Omnikey GmbH, 65396 Walluf (DE)
(72) Erfinder: SCHMID, Kurt, A-4030 Linz (AT)
(74) Vertreter: Secklehner, Günter
(86) Internationale Anmeldenummer: PCT/AT2002/000316
(87) Internationale Veröffentlichungsnummer: WO 2003/042900

(56) Entgegenhaltungen:
- EP-A- 0 313 093
- EP-A- 0 702 315
- DE-A- 19 515 713
- DE-A- 19 719 275

## Beschreibung

Die Erfindung betrifft eine Kontaktiereinrichtung für kartenförmige Informationsträger mit einem elektronischen Datenspeicherelement sowie eine Leseeinheit mit elektronischen Schaltkreisen zumindest zum Lesen von kartenförmigen Informationsträgern, wie dies in den Ansprüchen 1 und 23 angegeben ist.

Die US 6,070,797 A beschreibt einen tragbaren Leser für Chipkarten, insbesondere für sogenannte Smart-Cards. Dieser Leser weist ein blockförmiges Gehäuse auf, an dessen Oberseite eine LCD-Anzeige ausgebildet ist und dessen Rück- bzw. Unterseite einen oder mehrere elektrische Kontakte aufweist, welche mit den elektrischen Kontaktstellen auf einer entsprechenden Chipkarte elektrisch verbindbar sind, wenn die Karte gegenüber dem Leser entsprechend ausgerichtet wird. Zur vereinfachten Positionierung dieser Karte, relativ zum blockförmigen Gehäuse des Lesers, ist am Gehäuse zumindest ein begrenzt verstellbar gelagertes Positionierelement ausgebildet. Zusätzlich zu diesem, gegenüber dem Gehäuse des Lesers verstellbaren Positionierelement, kann auch ein fixes Positionierelement in Form einer Anschlagkante für eine auszulesende Karte ausgebildet sein. Um mit den Kontaktstellen der Chipkarte kontaktieren zu können, ist der Leser mit seinen elektrischen Kontakten auf die entsprechende Flachseite der Chipkarte aufzulegen und auszurichten. Nachteilig ist dabei, daß die Kontakte an der Unterseite des Lesers ständig zugreifbar sind und dadurch äußeren Einflüssen, wie z.B. Verschmutzungen, mechanischen Krafteinwirkungen und Berührungen durch den Benutzer ausgesetzt sind, wodurch längerfristig Kontaktierungsprobleme auftreten können.

Die EP 0 702 315 A2 beschreibt eine gattungsgemäße elektronische Kontaktiereinrichtung sowie eine gattungsgemäße Leseeinheit für kartenförmige Informationsträger, welche ein elektronisches Datenspeicherelement aufweisen. Die Kontaktiereinrichtung ist dabei in einem länglichen Gehäuse ausgebildet, in welchem quer zu dessen Längsstreckung ein schlitzförmiger Durchbruch ausgebildet ist. Dieser schlitzförmige Durchbruch bildet in einem Endbereich die Einführöffnung für die Breitseite eines kartenförmigen Informationsträgers aus und weist im dazu gegenüberliegendem Endbereich einen gegenüber dem Führungsquerschnitt im Durchbruch verengten Öffnungsquerschnitt auf, welcher als Auslass- bzw. Austrittsöffnung für eventuelle Verunreinigungen im Durchbruch fungiert. Der schlitzförmige Durchbruch weist innere Wandflächen auf, welche senkrecht zur Längserstreckung des Gehäuses verlaufen, sodass ein zugeführter Informationsträger rechtwinkelig zur Längserstreckung des Gehäuses in den Durchbruch einschiebbar ist, bis die vordere Breitseitenkante des kartenförmigen Informationsträgers an den sich verjüngenden inneren Wandflächen des Durchbruchs zur Anlage kommt und ein Durchqueren des Informationsträgers durch das Gehäuse der Lesevorrichtung unterbunden ist. Im schlitzförmigen Durchbruch angesammelter Schmutz kann jedoch via diese Auslassöffnung aus dem Durchbruch herausfallen. Gemäß einer weiteren Ausführungsform ist innerhalb des Durchbruchs im Gehäuse ein vertikal zur Zuführrichtung des Informationsträgers verstellbares, zungenartiges Betätigungselement für eine elektrische Schaltvorrichtung angeordnet. Dieses Betätigungselement für die Schaltvorrichtung kann dabei eine Anschlagnase für die vordere Breitseite eines zugeführten Informationsträgers aufweisen. Mittels diesem innerhalb des Durchbruchs verschwenkbar angeformten Anschlagelement, welches gleichzeitig als Betätigungselement für die Schaltvorrichtung dient, kann ein in Kontaktierungsposition befindlicher Informationsträger erfasst werden. Gemäß einer zusätzlichen Ausführungsform ist innerhalb des Durchbruchs ein balkenförmiges Schieberelement angeordnet, welches parallel zur Zuführrichtung des Informationsträgers und entlang des Durchbruches verstellbar gelagert ist. Dieses Schieberelement im Durchbruch dient dabei als Ausstoßvorrichtung für innerhalb des Durchbruchs angesammelten Schmutz. Insbesondere wird dieses Schieberelement beim manuellen Zuführen eines kartenförmigen Informationsträgers ausgehend von dessen vorderer Breitseitenkante mit Bewegungsenergie beaufschlagt und entgegen einer Federkraft tiefer in den Durchbruch hineinbewegt, bis das Schieberelement an den sich verjüngenden Wandflächen im Bereich der Auslassöffnung des Durchbruches zur Anlage kommt. Ein vorderer Abschnitt dieses Schieberelementes kann dabei in der maximal in den Durchbruch hineingeschobenen Position des Informationsträgers geringfügig aus der Auslassöffnung des Durchbruchs vorragen, um eventuell angesammelten Schmutz vollständig aus dem Durchbruch zu schieben. Gemäß einer Weiterbildung dieses Schieberelementes ist die Auslassöffnung mit einer deckelartigen Klappe bzw. mit zwei jalousieartigen Blenden gekoppelt, um die Auslassöffnung des Durchbruchs freizugeben bzw. abzudecken, sodass im inaktiven Zustand der Kontaktiereinrichtung ein Eindringen von Verunreinigungen in den Durchbruch über die Auslassöffnung unterbunden werden kann.

Der vorliegenden Erfindung liegt die Aufgabe zugrunde, eine Kontaktiereinrichtung für kartenförmige Informationsträger zu schaffen, die eine hohe Alltagstauglichkeit aufweist. Eine weitere Aufgabe der Erfindung liegt darin, eine Leseeinheit für kartenförmige Informationsträger zu schaffen, die kompakt aufgebaut ist und den Anforderungen häufigen Gebrauchs gerecht wird.

Eine Aufgabe der Erfindung wird durch die Merkmale des Anspruches 1 gelöst. Die sich durch die Ausgestaltung gemäß Anspruch 1 ergebenden Vorteile liegen darin, daß eine derartige Kontaktiereinrichtung besonders kompakt aufgebaut werden kann und daher ohne wesentlicher Einschränkungen besonders komfortabel getragen bzw. problemlos in Taschen von Kleidungsstücken eingesteckt werden kann. Insbesondere ist es dadurch ermöglicht, die Kontaktiereinrichtung ständig bei sich tragen zu können, wodurch die jeweiligen Funktionen bzw. die Nutzungsmöglichkeiten der jeweiligen Kontaktiereinrichtung jederzeit verfügbar sind. Die verstellbare Begrenzungsvorrichtung der Kontaktiereinrichtung erleichtert dabei eine exakte Positionierung bzw. Ausrichtung eines zu bearbeitenden, insbesondere eines zu lesenden Informationsträgers relativ zu dessen langgestrecktem Gehäuse oder Aufnahmekörper. Die besonderen Längen bzw. Breitenverhältnisse der Kontaktiereinrichtung ermöglichen dabei, daß diese problemlos auf einen entsprechenden Informationsträger aufgeschoben werden kann und dabei mit hoher Zuverlässigkeit und Genauigkeit gegenüber den normierten Kontaktierungsflächen des Informationsträgers positioniert wird. Wesentlich ist weiters, daß trotz der kompakten Abmessungen der Kontaktiereinrichtung keine filigranen Positionierelemente bzw. Begrenzungsvorrichtungen vorliegen, welche bei Unachtsamkeit in der Handhabung der Kontaktiereinrichtung leicht beschädigt oder deformiert werden könnten. Darüber hinaus begünstigt die langgestreckte, stabförmige Form der Kontaktiereinrichtung dessen Halterung in Taschen von Kleidern, Gepäck oder Koffern. Wesentlich ist auch, daß die elektrischen Kontaktelemente der Kontaktiereinrichtung innerhalb des Durchbruches des Gehäuses angeordnet sind und somit vor äußeren Krafteinwirkungen oder sonstigen Einflüssen geschützt sind. Die Gefahr einer Beschädigung, insbesondere des Zerkratzens oder Verbiegens der Kontaktelemente ist also weitgehendst beseitigt. Zudem wird dadurch erreicht, daß die empfindlichen Kontaktelemente vor direktem Zugriff bzw. vor Fingerabdrücken geschützt sind, wodurch längerfristig eine gute Kontaktierung mit den Kontaktierungsflächen eines kartenförmigen Informationsträgers gewährleistet werden kann. Weiters ist von Vorteil, daß das gegenüber dem Gehäuse oder Aufnahmekörper verstellbare bzw. ausfahrbare Ausschlagelement der Begrenzungsvorrichtung relativ kurz bzw. kompakt aufgebaut werden kann. Dadurch wird die Bruchgefahr desselben minimiert und auch noch nach häufiger Benutzung eine exakte Positionierung der kartenförmigen Informationsträger sichergestellt: Insbesondere wird durch die Formgebung des Gehäuses oder Aufnahmekörpers und durch den besonderen Verlauf des Durchbruches die freikragende Länge bzw. die auskragende Weite des gegenüber dem Gehäuse oder Aufnahmekörper ausstellbaren Anschlagelementes für den Informationsträger minimal gehalten, so daß das Anschlagelement auch größeren Belastungen bzw. Krafteinwirkungen standhalten kann. Die besonderen baulichen Maßnahmen bewirken also eine relativ hohe Robustheit bzw. Alltagstauglichkeit und gewährleisten eine langfristige Funktionstüchtigkeit und Positioniergenauigkeit für zu bearbeitende Informationsträger. Ferner ist von Vorteil, daß die Kontaktiereinrichtung sowohl zur Kontaktierung von Informationsträgern im Smart-Card-Format als auch zur Kontaktierung sogenannter SIM-Karten verwendet werden kann. Es ist also mit lediglich einer einzigen Kontaktiereinrichtung ermöglicht, zwei unterschiedliche Größen von kartenförmigen Informationsträgern wahlweise kontaktieren zu können, wobei mit dieser einen Kontaktiereinrichtung die gebräuchlichsten kartenförmigen Informationsträger verarbeitet werden können.

Vorteilhafte Detailausgestaltungen bzw. weitere Baumerkmale der erfindungsgemäßen Kontaktiereinrichtung sind in den Ansprüchen 2 bis 10 gekennzeichnet.

Eine mögliche Weiterbildung der erfindungsgemäßen Kontaktiereinrichtung ist in den Ansprüchen 11 bis 13 gekennzeichnet. Vorteilhaft ist dabei, daß das ausstellbare Anschlagelement der Kontaktiereinrichtung automatisch in die eingefahrene Position klappt bzw. zuverlässig in der eingezogenen Stellung gehalten wird, so daß ein ungewolltes Ausklappen verhindert ist. Dadurch wird die Gefahr des Verbiegens oder Abbrechens des Anschlagelementes bzw. der Begrenzungsvorrichtung infolge Unachtsamkeiten weiter verringert.

Die möglichen Weiterbildungen nach den Ansprüchen 14 bis 18 stellen eine hohe Positioniergenauigkeit einer SIM-Karte gegenüber der Kontaktiereinrichtung sicher bzw. wird durch die angebenden Maßnahmen die Handhabung der Kontaktiereinrichtung vereinfacht bzw. komfortabler.

Durch die mögliche Ausgestaltung nach Anspruch 19 kann die Kontaktiereinrichtung jederzeit am Körper des Benutzers getragen werden und sind dadurch die besonderen Funktionalitäten bestimmter elektronischer Einrichtungen jederzeit verfügbar.

Eine sichere Positionierung und Halterung eines Informationsträgers quer zu seiner Längsrichtung wird durch die Ausgestaltung nach Anspruch 20 mit einfachen Maßnahmen wirkungsvoll erzielt.

Durch die Ausgestaltung nach Anspruch 21 können auch geringfügig verformte oder in ihrer Stärke bzw. Dicke uneinheitliche Informationsträger problemlos verarbeitet werden.

Durch die Maßnahmen nach Anspruch 22 können mit der Kontaktiereinrichtung Lese- und/oder Schreibvorgänge gegenüber dem Datenspeicherelement des Informationsträgers vorgenommen werden, so daß die Kontaktiereinrichtung beispielsweise für Berechtigungsprüfungen, Identifikationsprüfungen, Transaktionen oder dgl. genutzt werden kann.

Eine eigenständige Lösung einer der Aufgaben der Erfindung ist durch die Ausbildung gemäß Anspruch 23 angegeben.

Die sich aus der Merkmalskombination dieses Anspruches ergebenden Vorteile liegen darin, daß durch die angegebene Kontaktiereinrichtung eine robuste und kompakte elektronische Leseeinheit geschaffen werden kann, die für den alltäglichen Gebrauch geeignet ist und eine langfristige Funktionstauglichkeit gewährleisten kann.

Durch die Ausgestaltung nach Anspruch 24 wird trotz des kompakten Aufbaus ein gutes Handling der Leseeinheit erreicht.

Durch die Ausgestaltung nach Anspruch 25 können relevante Daten bzw. Betriebszustände direkt am Gehäuse der Leseeinheit ausgegeben und visuell erfaßt werden.

Durch die vorteilhafte Weiterbildung nach Anspruch 26 wird eine Grundlage für eine gesicherte Aufbewahrung der Leseeinheit in Taschen des Benutzers geschaffen.

Durch die vorteilhafte Weiterbildung nach Anspruch 27 kann das Vorhandensein des Informationsträgers zuverlässig detektiert werden und der Energieverbrauch der Leseeinheit im Stand-by-Betrieb minimiert werden.

Ein unabhängiger, kabelloser Betrieb der Leseeinheit ist durch die Ausgestaltung nach Anspruch 28 gewährleistet.

Durch die Ausgestaltung nach Anspruch 29 oder 30 wird eine Kombination zwischen stationärer Haltevorrichtung und Aufladevorrichtung für die Leseeinheit erzielt, wodurch die Gefahr des Verlegens der Leseeinheit minimiert wird und eine stets betriebsbereite Leseeinheit zufolge ausreichend aufgeladener Akkumulatoren erzielt wird.

Im nachfolgenden werden in den Zeichnungen dargestellte Ausführungsbeispiele näher erläutert.

Es zeigen:
- Fig. 1: eine Ausgestaltung einer Kontaktiereinrichtung mit einem zuführbaren, kartenförmigen Informationsträger in Draufsicht und vereinfachter Darstellung;
- Fig. 2: die Kontaktiereinrichtung gemäß Fig. 1 mit einem bis auf Anschlag eingeschobenen und sich in Kontaktposition befindlichen, kartenformigen Informationsträger;
- Fig. 3: ein schematisiert dargestelltes Anwendungsbeispiel der Kontaktiereinrichtung für kartenförmige Informationsträger;
- Fig. 4: eine Kontaktiereinrichtung als Leseeinheit für kartenförmige Informationsträger in Form eines Schreibutensils;
- Fig. 5: die Kontaktiereinrichtung bzw. Leseeinheit gemäß Fig. 4 mit einem eingeschobenen, in Kontaktposition befindlichen kartenförmigen Informationsträger in vereinfachter, schematischer Darstellung;
- Fig. 6: eine Kontaktiereinrichtung bzw. Leseeinheit mit zusätzlichen Positioniermitteln zur Positionierung von SIM-Karten in vereinfachter, schematischer Darstellung;
- Fig. 7: die Positioniermittel der Leseeinheit gemäß Fig. 6 in vergrößertem Maßstab;
- Fig. 8: die zusätzlichen Positioniermittel für eine SIM-Karte in Ansicht durch den Durchbruch der Leseeinheit gemäß Fig. 6;
- Fig. 9: eine schubladen- bzw. schlittenartige Begrenzungsvorrichtung als Positioniermittel für kartenförmige Informationsträger gegenüber einem stabförmigen Gehäuse bzw. Aufnahmekörper;
- Fig. 10: die Kontaktiereinrichtung gemäß Fig. 9 im Einsatzzustand bei einem großformatigen Informationsträger;
- Fig. 11: die Kontaktiereinrichtung bzw. Leseeinheit nach Fig. 9 im Einsatzzustand bei einem kleinformatigen Informationsträger, insbesondere einer SIM-Karte;
- Fig. 12: eine weitere Ausführungsform der Kontaktiereinrichtung bzw. Leseeinheit mit einer dieser zugeordneten Basisstation, welche mit einer übergeordneten Recheneinheit verbindbar ist, in stark vereinfachter, schematischer Darstellung.

Einführend sei festgehalten, daß in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

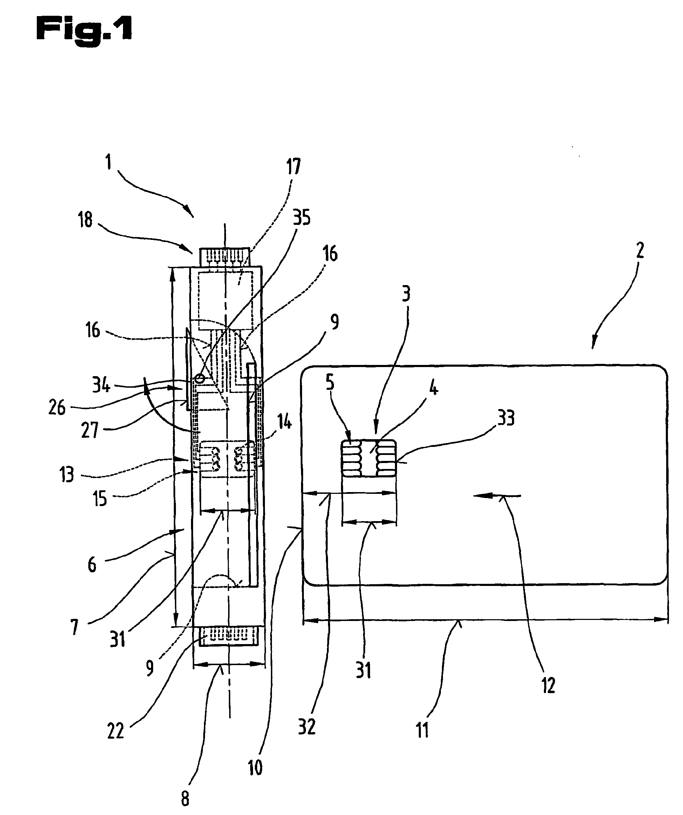

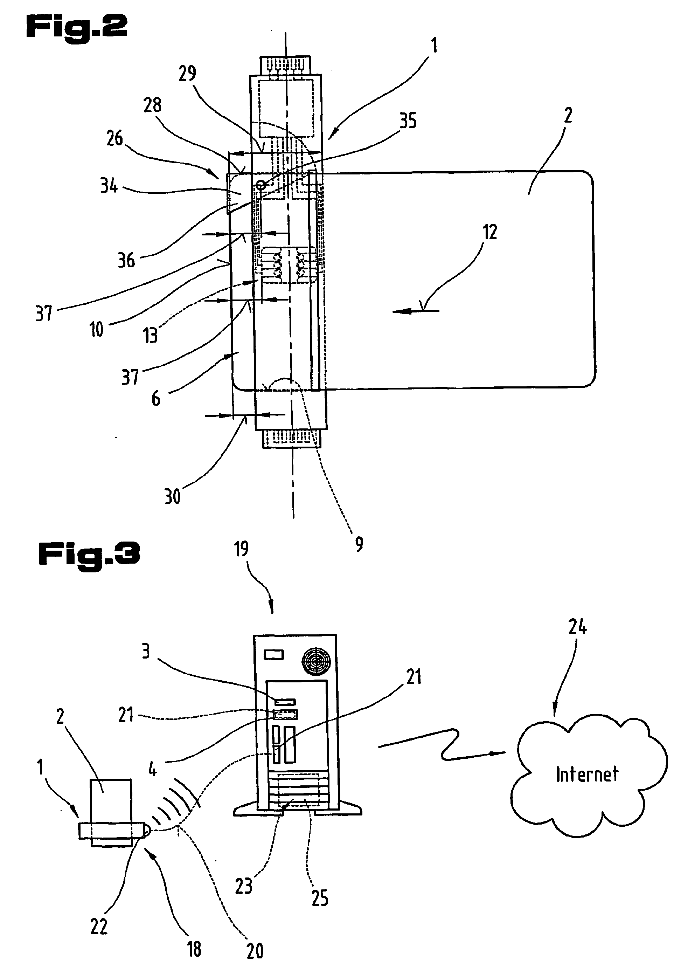

In den Fig. 1 und 2 ist eine mögliche Ausführungsform einer Leseeinheit bzw. Kontaktiereinrichtung 1 für kartenförmige Informationsträger 2 veranschaulicht. Die Leseeinheit bzw. Kontaktiereinrichtung 1 ist dabei durch ein kompaktes elektronisches Modul bzw. Gerät gebildet, mit welchem übliche Informationsträger 2 in Form von kartenförmigen Datenträgern verarbeitet, d.h. zumindest gelesen oder aber auch mit entsprechenden Daten beschrieben werden können. Unter Informationsträger 2 sind zum einen standardisierte Datenkarten bzw. sogenannte "Smart-Cards" mit darauf angeordnetem bzw. integriertem elektronischen Chip 3 zu verstehen. Dieser elektronische Chip 3 bzw. der dementsprechende Elektronikschaltkreis umfaßt einen Mikrorechner und einen diesem Mikrorechner zugeordneten, elektronischen Datenspeicher. Derartige Informationsträger 2 mit einem elektronischen Chip 3 werden auch als intelligente Datenkarten bzw. Datenträger bezeichnet, da mittels dem Mikrorechner und dem Datenspeicherelement Rechen- bzw. Vergleichsoperationen ausgeführt werden können. Hierfür umfaßt der Chip 3 bevorzugt einen programmgesteuerten Mikrorechner, welcher entsprechend den Vorgaben im auszuführenden Softwareprogramm arbeitet.

Im dargestellten Beispiel gemäß den Fig. 1 und 2, das keinen Teil der Erfindung darstellt, ist eine tragbare, kompakte Leseeinheit bzw. Kontaktiereinrichtung 1 zur Verarbeitung von Informationsträgern 2 bzw. Kartenkörpern aus Kunststoff mit Abmessungen von in etwa 85 mm mal in etwa 54 mm bzw. entsprechend den standardisierten Dimensionen sogenannter Chipkarten, schematisch veranschaulicht.

Im Datenspeicherelement des Chip 3 sind im Vergleich zu herkömmlichen Magnetkarten jedenfalls relativ große Datenmengen hinterlegbar. Zudem kann durch die rechnerbedingte "Intelligenz" der Chipkarte hohen Sicherheitsanforderungen Rechnung getragen werden.

Damit der elektronische Chip 3 des Informationsträgers 2 mit peripheren elektronischen Einheiten in Verbindung treten kann, ist - wie an sich bekannt - an wenigstens einer Flachseite des Informationsträgers 2 ein Kontaktfeld 4 ausgebildet. Dieses Kontaktfeld 4 umfaßt mehrere, insbesondere wenigstens zwei, üblicherweise aber sechs oder acht Kontaktierungsflächen 5, welche als elektrische Schnittstelle zu peripheren Einheiten des Chips 3 dienen.

Die Leseeinheit bzw. Kontaktiereinrichtung 1 besteht u.a. aus einem länglichen bzw. stabförmigen Gehäuse oder Aufnahmekörper 6 als Träger für die nachfolgend noch beschriebene Kontaktvorrichtung und als Haltemittel für einen einzuführenden Informationsträger 2. Eine Länge 7 dieses bevorzugt aus Kunststoff gebildeten Aufnahmekörpers 6 beträgt ein Mehrfaches einer Breite 8 des Gehäuses bzw. Aufnahmekörpers 6. Eine Breite 8 des Aufnahmekörpers 6 kann beispielsweise lediglich in etwa 15 mm bis 25 mm betragen und die Länge 7 des stift- bzw. stabförmigen Aufnahmekörpers 6 beträgt in der Regel mehr als etwa 70 mm.

Im Gehäuse oder Aufnahmekörper 6 ist wenigstens eine Einführöffnung 9 zum bedarfsweisen Einschieben bzw. Einstecken eines kartenförmigen Informationsträgers 2 ausgebildet. Die Einführöffnung 9 ist bevorzugt schlitzförmig ausgebildet und derart dimensioniert, daß eine Stirnseite bzw. eine Breitseite 10 des Informationsträgers 2 zumindest teilweise in die schlitzförmige Einführöffnung 9 bzw. in den Aufnahmekörper 6 eingesteckt werden kann. Die Breiten- und Höhenabmessungen der schlitzförmigen Einführöffnung 9 sind demnach annähernd gleich oder geringfügig größer als die stirnseitigen Abmessungen des kartenförmigen Informationsträgers 2 an dessen Breitseite 10. Somit weist die Einführöffnung 9 eine Breite von in etwa 55 mm und eine der Kartendicke entsprechende Höhe von mehr als 1,5 mm auf.

Vorteilhafterweise verläuft eine Längserstreckung 11 eines zuzuführenden Informationsträgers 2 bzw. eine Zuführrichtung - gemäß Pfeil 12 - für einen Informationsträger 2 winkelig, insbesondere rechtwinkelig, zur Längserstreckung bzw. Länge 7 des Aufnahmekörpers 6. D.h. die Zuführrichtung - gemäß Pfeil 12 - des kartenförmigen Informationsträgers 2 ist querverlaufend zur Länge 7 des Aufnahmekörpers 6 bzw. parallelverlaufend zur Breite 8 des Aufnahmekörpers 6 vorgesehen.

Damit die Leseeinheit bzw. Kontaktiereinrichtung 1 mit dem Chip 3 des Informationsträgers 2 in Kommunikationsverbindung treten kann, ist in der Einführöffnung 9 des Aufnahmekörpers 6 eine Kontaktvorrichtung 13 angeordnet. Diese Kontaktvorrichtung 13 besteht aus einer Mehrzahl von block- bzw. matrixartig angeordneten Kontaktelementen 14. Diese Kontaktelemente 14 sind üblicherweise durch eine Mehrzahl federelastisch gelagerter bzw. federelastisch nachgiebiger Kontaktfahnen gebildet, wobei die Kontaktvorrichtung 13 auch als standardmäßig verfügbarer, vorgefertigter Kontaktblock ausgeführt sein kann. Die Kontaktvorrichtung 13 umfaßt wenigstens zwei, üblicherweise sechs oder acht Kontaktelemente 14, welche derart positioniert sind, daß diese mit den jeweiligen Kontaktierungsflächen 5 eines zu bearbeitenden Informationsträgers 2 in elektrische Kontaktverbindung treten können. Die Kontaktvorrichtung 13 stellt also eine kontaktbehaftete Schnittstelle 15 zum Chip 3 eines zu verarbeitenden Informationsträgers 2 dar.

Gemäß einer vorteilhaften Weiterbildung bzw. Ausgestaltung der Kontaktiereinrichtung ist die kontaktbehaftete Schnittstelle 15 bzw. deren Kontaktvorrichtung 13 über mehrere Leitungen 16 mit einem innerhalb des Gehäuses bzw. Aufnahmekörpers 6 angeordneten, elektronischen Schaltkreis 17 verbunden. Dieser Schaltkreis 17 kann dabei durch einen Mikrorechner oder durch eine fix programmierte Gatteranordnung mit interner Logik gebildet sein. Bevorzugt ist dieser elektronische Schaltkreis 17 vom Gehäuse bzw. Aufnahmekörper 6 allseitig umgeben bzw. in diesem integriert oder eingespritzt, um vor äußeren Einflüssen bestmöglich geschützt zu sein. Der Schaltkreis 17 kann dabei eine programmierte Intelligenz aufweisen und selbst bestimmte Rechenoperationen und/oder kryptographische Verschlüsselungen und/oder Prüfaufgaben ausführen oder aber auch als einfache Interfacelogik mit vorgegebenen Schaltzustandsabläufen in Art einer "State-Machine" ausgeführt sein.

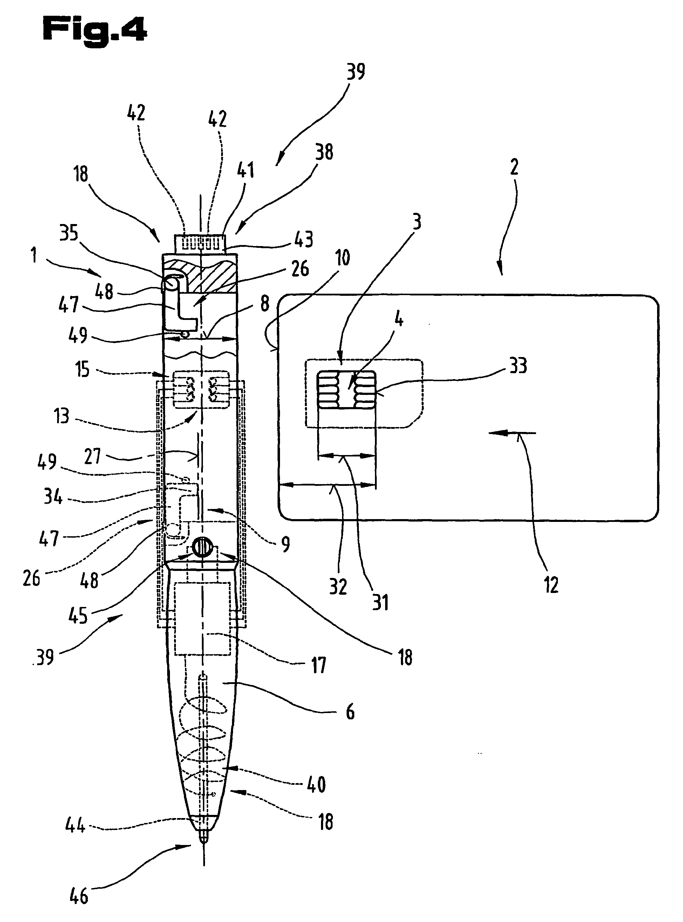

Bevorzugt umfaßt die elektronische Leseeinheit bzw. Kontaktiereinrichtung 1 neben der ersten, kontaktbehafteten Schnittstelle 15 zum Chip 3 eines Informationsträgers 2 weiters eine zweite Schnittstelle 18. Diese Schnittstelle 18 kann dabei als drahtgebundene oder auch als drahtlose Schnittstelle 18 ausgebildet sein, wie dies in Fig. 3 veranschaulicht ist. Über diese externe, drahtlose Schnittstelle 18 ist die Leseeinheit 1 mit einer übergeordneten Recheneinheit 19, wie z.B. einem Personal Computer, einem Laptop oder einer sonstigen Recheneinheit für allgemeine Verwendungszwecke, verbindbar.

Zusätzlich oder alternativ zur drahtlosen Schnittstelle 18 ist es selbstverständlich auch möglich, die Schnittstelle 18 als drahtgebundenes Interface auszubilden. Dabei ist ein Kabel 20 vorzusehen, über welches die Schnittstelle 18 der Leseeinheit mit einer geeigneten, kontaktbehafteten Schnittstelle 21 einer Recheneinheit 19 verbindbar ist. Die Schnittstelle 21 der Recheneinheit 19 kann beispielsweise durch eine serielle Schnittstelle (RS232) oder eine parallele Schnittstelle gebildet sein.

Idealerweise ist die Schnittstelle 18 der Leseeinheit bzw. Kontaktiereinrichtung 1 durch eine Steckverbindungsvorrichtung 22 zur Ankopplung der Leseeinheit bzw. Kontaktiereinrichtung 1 an eine USB-(Universal Serial Bus) Schnittstelle der Recheneinheit 19 gebildet. Die Steckverbindungsvorrichtung 22 an der Leseeinheit bzw. Kontaktiereinrichtung 1 kann dabei zur direkten Ankopplung bzw. zum direkten Einstecken der Leseeinheit bzw. Kontaktiereinrichtung 1 an eine das USB-Protokoll unterstützende Schnittstelle 21 der Recheneinheit 19 ausgebildet sein und/oder mittels einem USB-fähigen Kabel 20 an die Recheneinheit 16 anschließbar sein.

Sofern die Schnittstelle 18 der Leseeinheit als drahtlose Datenschnittstelle ausgebildet ist, können Signale bzw. Daten zwischen der Leseeinheit und der übergeordneten Rechnereinheit 19 draht- bzw. kabellos übertragen werden. Eine derartige Schnittstelle 18 der Leseeinheit kann dabei zur Aussendung und/oder zum Empfang optischer Signale, insbesondere von Infrarot-Signalen, ausgebildet sein. Gemäß einer verbesserten Ausführungsform ist die drahtlose Schnittstelle 18 durch wenigstens eine Antenne zur Übertragung und/oder zum Empfang elektromagnetischer Wellen ausgebildet. In diesem Fall ist der Antenne eine Modulator- und/oder eine Demodulator-Schaltung vor- bzw. nachgeordnet. Idealerweise ist die drahtlose Schnittstelle 18 durch eine standardisierte Schnittstelle zur Funkdatenübertragung, beispielsweise durch eine sogenannte Bluetooth-Schnittstelle, gebildet. Vorteilhaft ist dabei, daß diese Technologie die problemlose Anbindung an eine Vielzahl von Recheneinheiten 19, wie z.B. Personal-Computer, Handheld-Computer, Organizer, Mobiltelefone oder sonstige elektronische Geräte erlaubt, nachdem keine Verkabelung erforderlich ist, um die Kommunikationsverbindung zur Leseeinheit aufbauen zu können.

Anstelle eines Personal-Computers als Recheneinheit 19 ist die erfindungsgemäße Leseeinheit selbstverständlich auch an jede andere Recheneinheit 19, beispielsweise an einen Laptop, eine Workstation, ein Mobiltelefon, einen mobilen Organizer bzw. einen sonstigen Handheld-PC anbindbar, sofern diese elektronische Recheneinheit 19 über die jeweiligen Spezifikationen zur Verbindung mit der Leseeinheit verfügt.

Im Regelfall ist die Recheneinheit 19 über wenigstens ein Kommunikationsmittel 23 mit einem globalen Kommunikationsnetzwerk 24, beispielsweise mit dem sogenannten Internet, verbindbar. Das Kommunikationsmittel 23 kann dabei zur Übertragung von Daten und/oder Audio- und/ oder Videosignalen vorgesehen und beispielsweise durch ein sogenanntes Modem 25 gebildet sein. Das Modem 25 kann dabei zur drahtgebundenen und/oder drahtlosen Fernübertragung sowie zum Empfangen von Daten bzw. Signalen via dem Kommunikationsnetzwerk 24 ausgebildet sein. Die Recheneinheit 19 umfaßt bevorzugt wenigstens eine nicht dargestellte Eingabevorrichtung, beispielsweise eine Tastatur oder ein Touch-Pad und eine der Einfachheit halber nicht dargestellte Ausgabevorrichtung, z.B. einen Monitor oder ein Display.

Wie in Fig. 1 und Fig. 3 ersichtlich, ist im Gehäuse oder Aufnahmekörper 6 angeordneter Schaltkreis 17 einerseits mit der Kontaktvorrichtung 13 und andererseits mit einer drahtlosen und/oder drahtgebundenen Schnittstelle 18 zu einer übergeordneten Recheneinheit 19 verbunden. Der Schaltkreis 17 stellt insbesondere eine Interfacelogik dar, welche mit der kartenseitigen, kontaktbehafteten Schnittstelle 15 sowie mit der rechnerseitigen Schnittstelle 18 elektrisch verbunden ist und wenigstens als Interpreter zwischen einem für die erste Schnittstelle 15 gültigen Kommunikationsprotokoll und einem dazu unterschiedlichen Kommunikationsprotokoll für die zweite Schnittstelle 18 dient. Der Schaltkreis 17 ist also wenigstens dazu vorgesehen, die Kompatibilität bzw. Verträglichkeit der ersten Schnittstelle 15 zu einem Informationsträger 2 gegenüber der zweiten Schnittstelle 18 zu einer übergeordneten Recheneinheit 19 und umgekehrt herzustellen.

Die Ausrichtung bzw. Positionierung der Kontaktvorrichtung 13 relativ zur Einführöffnung 9 ist derart gewählt, daß die Kontaktvorrichtung 13 mit dem Kontaktfeld 4 eines einzuführenden Informationsträgers 2 fluchtet. Insbesondere ist die Kontaktvorrichtung 13 gegenüber der Einführöffnung 9 etwas außermittig angeordnet, um mit dem bezugnehmend auf die Breitseite 10 eines standardmäßigen Informationsträgers 2 gleichfalls etwas außermittig angeordneten Kontaktfeldes 4 entsprechend kontaktieren zu können.

Die Einführöffnung 9 ist bevorzugt als sich durch das Gehäuse bzw. den Aufnahmekörper 6 durchgängig erstreckende Ausnehmung ausgebildet. D.h. eine Länge bzw. Tiefe der schlitzförmigen Einführöffnung 9 für den kartenförmigen Informationsträger 2 erstreckt sich durchgehend über die gesamte Breite 8 der Leseeinheit, so daß die Einführöffnung 9 als Durchgangsschlitz durch das Gehäuse bzw. den Aufnahmekörper 6 bezeichnet werden kann. Ein zu verarbeitender Informationsträger 2 ist also durch die Leseeinheit bzw. den Aufnahmekörper 6 hindurchsteckbar und ragt somit im Betriebs- bzw. Einsatzzustand gemäß Fig. 2 durch die Leseeinheit bzw. den Aufnahmekörper 6 hindurch. Insbesondere durchquert ein zu bearbeitender, kartenförmiger Informationsträger 2 das Gehäuse bzw. den Aufnahmekörper 6 der Leseeinheit quer zu dessen Länge 7.

Um den kartenförmigen Informationsträger 2 bzw. dessen elektrische Kontaktierungsflächen 5 in bezug zur Kontaktvorrichtung 13 der Leseeinheit exakt und mühelos positionieren zu können, ist am Gehäuse oder Aufnahmekörper 6 wenigstens eine Begrenzungsvorrichtung 26 ausgebildet. Diese Begrenzungsvorrichtung 26 begrenzt die Einschubtiefe des kartenförmigen Informationsträgers 2 relativ zur Einführöffnung 9 bzw. relativ zur Kontaktvorrichtung 13. Die Begrenzungsvorrichtung 26 ist gegenüber dem Gehäuse bzw. Aufnahmekörper 6 verstellbar gelagert. Insbesondere ist die Begrenzungsvorrichtung gegenüber einer Außenumgrenzung bzw. gegenüber einer Mantelfläche der Leseeinheit ausstellbar, so daß die Begrenzungsvorrichtung 26 eine vom Gehäuse bzw. Aufnahmekörper vorragende Stellung einnehmen kann. Die Begrenzungsvorrichtung 26 ist beispielsweise gegenüber dem Gehäuse der Aufnahmekörper ausfahrbar oder ausklappbar ausgestaltet und kann dabei wechselweise von der in Fig. 1 dargestellten Ruhe- bzw. Ausgangsposition 27 in die in Fig. 2 dargestellte Aktivstellung 28 überführt werden. Während die Begrenzungsvorrichtung 26 bei Einnahme der Ausgangsposition 27 mit dem Gehäuse oder Aufnahmekörper 26 weitgehendst bündig abschließt, ragt die Begrenzungsvorrichtung 26 in ihrer Aktivstellung 28 deutlich von der Au-ßenumgrenzung bzw. von der Längsseite, welche die Länge 7 aufweist, vor. Insbesondere verhindert die wenigstens eine gegenüber dem Gehäuse bzw. Aufnahmekörper 6 ausstellbare Begrenzungsvorrichtung ein gänzliches Durchschieben des Informationsträgers 2 durch die Leseeinheit. Insbesondere limitiert die Begrenzungsvorrichtung 26 eine Durchsteckweite 29 für den Informationsträger 2 ausgehend vom Beginn der schlitzförmigen Einführöffnung 9. Mit anderen Worten begrenzt die Begrenzungsvorrichtung 26 einen Überstand 30 des kartenförmigen Informationsträgers eines auf die Zuführrichtung bezogenen Austrittsbereiches des Informationsträgers 2 aus der schlitzförmigen Einführöffnung 9.

Da die Einführöffnung 9 als Durchgangsschlitz ausgebildet ist, stellt diese an sich selbst keine Begrenzung bzw. einen Anschlag beim Einschieben eines Informationsträgers 2 in die Einführöffnung 9 dar, sondern ist hierfür die aufstell- bzw. verstellbare Begrenzungsvorrichtung 26 vorgesehen.

Durch diese verstellbare Begrenzungsvorrichtung 26 ist es möglich, daß eine auf eine Zuführrichtung - Pfeil 12 - eines Informationsträgers 2 bezogene Breite des Gehäuses oder des Aufnahmekörpers 6 im deaktivierten bzw. inaktiven Zustand der Begrenzungsvorrichtung 26 in etwa der in gleicher Richtung gemessenen Erstreckung 31 der Kontaktvorrichtung 13 oder der feldförmigen Kontaktierungsflächen 5 entspricht. Wesentlich ist, daß durch die Begrenzungsvorrichtung 26 eine Breite 8 des Gehäuses bzw. Aufnahmekörpers 6 im deaktivierten bzw. eingezogenen Zustand der Begrenzungsvorrichtung 26 kleiner bemessen sein kann als ein Abstand 32 zwischen dem linken Rand bzw. einer zum Chip 3 nächstliegenden Breitseite 10 des Informationsträgers 2 und der dazu abgewandten, rechten Begrenzung 33 der Kontaktierungsfläche 5 des Chip 3.

Durch die zuvor erwähnten Mittel bzw. Maßnahmen lassen sich daher besonders kompakte Leseeinheiten gestalten, welche aufgrund ihrer geringen Abmessungen einfach eingesteckt und durch einen Anwender komfortabel am Körper getragen werden können.

Gemäß einem Beispiel, das als Hintergrundinformation nicht Teil der Erfindung ist, wie es in den Fig. 1 und 2 schematisch veranschaulicht wurde, ist zur funktionssicheren bzw. ordnungsgemäßen und in der Handhabung besonders einfachen Positionierung eines zu kontaktierenden Informationsträgers 2 in bezug zur Kontaktvorrichtung 13 bzw. Schnittstelle 15 am Gehäuse bzw. Aufnahmekörper 6 der Kontaktiereinrichtung 1 wenigstens ein verstellbar, insbesondere verschwenkbar gelagertes Anschlagelement 34 ausgebildet. Dieses am Gehäuse bzw. am Aufnahmekörper 6 verschwenkbar gelagerte Anschlagelement 34 begrenzt in der in Fig. 2 veranschaulichten, gegenüber dem Gehäuse bzw. dem Aufnahmekörper 6 vorragenden Aktivstellung 28 die Durchsteckweite 29 eines zu kontaktierenden Informationsträgers 2 in Richtung dessen Zuführrichtung - gemäß Pfeil 12 - gegenüber dem länglichen Gehäuse bzw. Aufnahmekörper 6.

Dieses Anschlagelement 34 ist dabei in Draufsicht L-förmig oder im wesentlichen dreieckförmig ausgebildet und um eine Schwenkachse 35 verdrehbar gelagert. Diese Schwenkachse 35 verläuft dabei vertikal zu einer Kontaktierungsebene bzw. vertikal zur Kontaktierungsfläche 5 oder Flachseite eines einführbaren, kartenförmigen Informationsträgers 2. Vorteilhaft ist es, wenn die Schwenkachse 35 für das Anschlagelement 34 im randseitigen Bereich des Gehäuses oder Aufnahmekörpers 6 ausgebildet und dem auf die Zuführrichtung - gemäß Pfeil 12 - bezogenen Endbereich der schlitzförmigen Einführöffnung 9 zugeordnet ist.

Das Anschlagelement 34 kann dabei als ein den Eckbereich eines zugeführten kartenförmigen Informationsträgers 2 teilweise aufnehmendes Halteorgan 36 ausgebildet sein, welches einen Eck- bzw. Kantenbereich eines zuzuführenden Informationsträgers 2 wenigstens abschnittsweise taschenartig aufnimmt. Dadurch wird neben der exakten Positionierung des Informationsträgers 2 bezugnehmend auf die Zuführrichtung - gemäß Pfeil 12 - auch eine Halterung bzw. Positionierung des Informationsträgers 2 in den dazu quer verlaufenden Raumrichtungen ermöglicht. Insbesondere kann dadurch ein Informationsträger 2 in Höhen-, Seiten- und Längsrichtung ohne mühselige, manuelle Ausrichtarbeiten gegenüber dem Gehäuse bzw. Aufnahmekörper 6 der Kontaktiereinrichtung 1 positionsgenau zugeführt und ausgerichtet werden. Das in Art einer Haltetasche ausgebildete Halteorgan 36 bzw. Anschlagelement 34 für einen entsprechenden kartenförmigen Informationsträger 2 ist aus der Darstellung gemäß Fig. 2 klar zu erkennen.

Wenigstens Teilbereiche des Anschlagelementes 34 sind innerhalb der Einführöffnung 9 angeordnet. Im Verstellbereich des Anschlagelementes 34 ist - wie in strichlierten Linien schematisch dargestellt wurde - die Einführöffnung 9 im Regelfall etwas erweitert, so daß ausreichend Freiraum für dessen Verschwenkung gegeben ist.

Jedenfalls wird ein zu bearbeitender Informationsträger 2 einerseits via die Wandungen der Einführöffnung 9 und/oder mittels innerhalb der Einführöffnung 9 angeordneter Vorsprünge bzw. dementsprechender warzenartiger Erhebungen und andererseits über das Anschlagelement 34 relativ zum Gehäuse bzw. Aufnahmekörper 6 exakt in Höhen-, Seiten- und Längsrichtung gegenüber der Kontaktvorrichtung 13 bzw. gegenüber dem dementsprechenden Kontaktblock positioniert. D.h. ein der Kontaktiereinrichtung 1 zuzuführender Informationsträger 2 ist nicht bloß auf die Kontaktvorrichtung 13 frei aufgelegt, sondern hat im wesentlichen lediglich einen in und entgegen der Zuführrichtung - gemäß Pfeil 12 - verlaufenden Freiheitsgrad der Bewegung.

Eine Länge 37 des Anschlagelementes 34 ausgehend von der Schwenkachse 35 bis zu einer Anschlagfläche für einen Informationsträger 2 am Anschlagelement 34 entspricht im wesentlichen dem erforderlichen Überstand 30 der Breitseite 10 eines Informationsträgers 2 in Bezug zum Endbereich der Einführöffnung 9.

Das Anschlagelement 34 der Begrenzungsvorrichtung 26 kann dabei frei drehbar gelagert sein oder aber - wie nachfolgend noch näher beschrieben wird - federelastisch vorgespannt stetig in die in Fig. 1 ersichtliche Ruhe- oder Ausgangsposition 27 gedrängt werden.

Die Kontaktiereinrichtung 1 ist jedenfalls derart kompakt aufgebaut, daß eine in Zuführrichtung - Pfeil 12 - eines Informationsträgers 2 gemessene Breite 8 des Gehäuses oder Aufnahmekörpers 6 im deaktivierten/inaktiven Zustand der Begrenzungsvorrichtung(en) 26 in etwa der in gleicher Richtung gemessenen Erstreckung 31 der Kontaktvorrichtung 13 bzw. der Kontaktierungsflächen 5 entspricht. Dementsprechend ist dessen Breite 8 kleiner bemessen als ein Abstand 32 zwischen einer Breitseite 10 oder einem linken Rand des kartenförmigen Informationsträgers 2 und der rechten Begrenzung 33 der Kontaktierungsflächen 5.

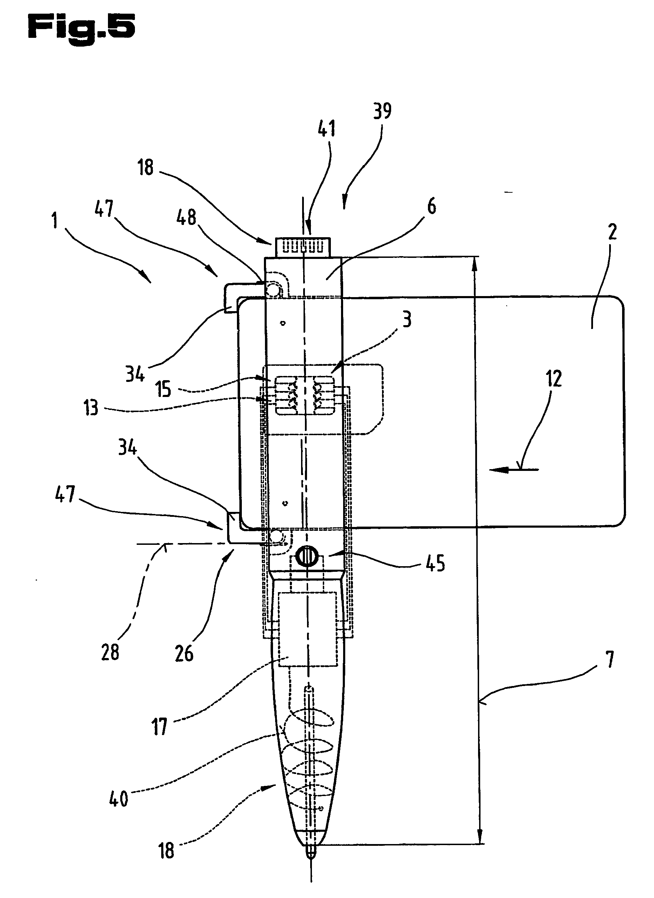

In den Fig. 4 und 5 ist ein anderes Beispiel, das nicht Teil der Erfindung ist, einer Kontaktiereinrichtung 1 schematisch vereinfacht dargestellt. Für vorhergehend bereits beschriebene Teile der Kontaktiereinrichtung 1 werden jeweils gleiche Bezugszeichen verwendet und sind vorhergehende Beschreibungsteile sinngemäß auf gleiche Teile mit gleichen Bezugszeichen übertragbar.

Bei dieser Ausgestaltung ist die Kontaktiereinrichtung 1 in Anlehnung an die Form eines Schreibutensils 38 ausgebildet. Insbesondere ist die Kontaktiereinrichtung 1 in einem stiftartigen Gehäuse bzw. Aufnahmekörper 6 integriert und sind zudem elektrische Komponenten zur Verwendung als Leseeinheit 39 für den Chip 3 eines zuführbaren Informationsträgers 2 im bzw. am stiftförmigen Gehäuse bzw. Aufnahmekörper 6 vorgesehen. Um den Chip 3 entsprechend ansteuern bzw. ansprechen zu können, umfaßt die stiftartige Leseeinheit 39 - wie vorhergehend bereits erwähnt - den elektronischen Schaltkreis 17, welcher einerseits mit der Kontaktvorrichtung 13 in Verbindung steht und andererseits mit wenigstens einer kontaktbehafteten und/oder einer kontaktlosen Schnittstelle 18, wie z.B. einer Antenne 40, zu einer peripheren elektronischen Recheneinheit verbunden ist. Dieser elektronische Schaltkreis 17 innerhalb des stiftförmigen Gehäuses bzw. Aufnahmekörpers 6 stellt quasi den Interpreter bzw. die Interfacelogik zwischen der kontaktbehafteten Schnittstelle 15 zu einem geeigneten Informationsträger 2 und wenigstens einer beliebig ausgestalteten Schnittstelle 18 zu einer elektronischen Peripherieeinheit dar. Sofern die Leseeinheit 39 eine drahtlose Schnittstelle 18 mit einer Antenne 40 zur Aussendung und/oder zum Empfang elektromagnetischer Wellen, beispielsweise gemäß dem Bluetooth-Standard, aufweist, so umfaßt der Schaltkreis 17 auch eine elektronische Modulator- und/oder Demodulator-Schaltung. Bevorzugt ist dieser Schaltkreis 17 dann durch einen standardmäßig verfügbaren Bluetooth-Chip gebildet. Die drahtlose Schnittstelle 18 kann jedenfalls lediglich als unidirektionaler Übertragungskanal und/oder als bidirektionaler Übertragungskanal zum Empfangen und Senden von Informationen bzw. Daten gegenüber einer elektronischen Peripherieeinheit, wie z.B. einem Transaktionsterminal, einem Personal-Computer, einem mobilen Organizer oder dgl., vorgesehen sein. Die externe Schnittstelle 18 der Leseeinheit 39 ist dazu vorgesehen, Daten aus dem Chip 3 eines zuführbaren Informationsträgers 2 auszulesen und/oder auf den Chip 3 eines entsprechenden Informationsträgers 2 zu schreiben bzw. vorhandene Daten zu verändern. Derartige Manipulationen des Chip 3 sind allgemein üblich und werden in vielen aus dem Stand der Technik bekannten Einsatzgebieten angewandt, so daß nicht näher darauf eingegangen wird.

Zusätzlich oder alternativ zu einer drahtlosen Funkschnittstelle mit einer Antenne 40, welche bevorzugt innerhalb des Gehäuses oder Aufnahmekörpers 6 angeordnet bzw. darin integriert ist, kann eine kontaktbehaftete Schnittstelle 18, bevorzugt in Form einer USB-Schnittstelle 41, ausgebildet sein. Eine derartige USB-Schnittstelle 41 ist idealerweise in einem stirnseitigen Endbereich der als Schreibutensil 38 ausgeführten Leseeinheit 39 angeordnet. Diese USB-Schnittstelle 41 weist einen Steckbereich mit mehreren Kontaktfahnen 42 auf, welche mit einer korrespondierenden USB-Schnittstelle einer Rechnereinheit oder mit einem geeigneten USB-Kabel gemäß den Spezifikationen für eine USB-Kopplung von elektrischen Komponenten verbindbar ist.

Gemäß einer vorteilhaften Ausgestaltungsform kann die USB-Schnittstelle 41 ähnlich einem Betätigungselement 43 eines herkömmlichen Schreibutensils 38, beispielsweise eines Kugelschreibers, ausgebildet sein. Die USB-Schnittstelle 41 ist in ihrer Form, also mit einem Betätigungselement 43, zum Aus- und Einfahren einer Schreibmine 44 gegenüber dem Gehäuse bzw. Aufnahmekörper 6 vergleichbar und weist bevorzugt die Form einer aus dem Video-Bereich bekannten Mini-USB-Schnittstelle auf. Die USB-Schnittstelle 41 kann dabei lediglich eine Attrappe für ein Betätigungselement 43 der Schreibmine 44 darstellen, oder aber auch als funktionstüchtiges Betätigungselement 43 des Schreibutensils 38 bzw. der Schreibmine 44 ausgeführt sein.

Die externe Schnittstelle 18 zu peripheren elektronischen Einheiten, welche die Daten eines der Kontaktiereinrichtung 1 zugeführten Informationsträgers 2 auslesen und/oder verändern können bzw. sollen, kann aber auch als einfache Steckbuchse 45 ausgebildet sein, welche wenigstens zwei elektrische Kontakte umfaßt. In diese Steckbuchse 45 am Gehäuse bzw. Aufnahmekörper 6 der Leseeinheit 39 ist ein entsprechender Stecker, beispielsweise ein sogenannter Bananenstecker, mit Kabelverbindung zu einer übergeordneten elektronischen Auswerteeinheit bedarfsweise ein- und aussteckbar. Über diese als Steckbuchse 45 ausgebildete Schnittstelle 18 kann auch eine Versorgung des Schaltkreises 17 und/oder des Chips 3 eines Informationsträgers 2 mit elektrischer Energie erfolgen bzw. kann über diese Kontakte eine Kommunikation bzw. Datenübertragung zwischen dem Chip 3 bzw. dem Schaltkreis 17 und einer übergeordneten Recheneinheit 19 - Fig. 3 - aufgebaut werden.

Die Leseeinheit 39 erfüllt bevorzugt auch die Funktionen eines Kugelschreibers, Minenbleistifts oder eines Filzstiftes und ist dabei in seinen Abmessungen und/oder Formen einem derartigen Schreibutensil 38 zumindest ähnlich. Die schlitzförmige Einführöffnung 9 für einen karten- bzw. blattförmigen Informationsträger 2 ist bevorzugt in dem von einer Schreibspitze 46 abgewandten Abschnitt des als elektronische Leseeinheit 39 fungierenden Schreibutensils 38 vorgesehen. Eine Breite 8 bzw. ein dementsprechender Durchmesser des stiftförmigen Aufnahmekörpers 6 für die Kontaktiereinrichtung 1 entspricht in etwa einer Erstreckung 31 des Kontaktfeldes 4 des Chips 3 in Zuführrichtung - gemäß Pfeil 12 - des kartenförmigen Informationsträgers 2. Eine Breite 8 bzw. ein Durchmesser der stiftförmigen Leseeinheit 39 beträgt daher lediglich in etwa 15 bis 20 mm. Insbesondere kann die parallel zur Zuführrichtung - gemäß Pfeil 12 - gemessene Dimension des stiftförmigen Aufnahmekörpers 6 in etwa der auf die gleiche Richtung bezogenen Abmessung der Kontaktvorrichtung 13 bzw. des dem entsprechenden Kontaktblockes entsprechen. Es können also ähnlich einem Schreibutensil 38 besonders schlanke bzw. kleinformatige Gehäuse bzw. Aufnahmekörper 6 zumindest als Kontaktiereinrichtung 1 für kartenförmige Informationsträger 2 eingesetzt werden.

Um einen kartenförmigen Informationsträger 2 im ISO-Standardformat gegenüber der Kontaktvorrichtung 13 der stiftartigen Leseeinheit 39 derart plazieren zu können, daß eine ordnungsgemäße und mühelose Kontaktierung des Kontaktfeldes 4 des Chips 3 am Informationsträger 2 gegenüber der gehäuseseitigen Kontaktvorrichtung 13 gewährleistet ist, ist am Aufnahmekörper 6 der Leseeinheit 39 wiederum die Begrenzungsvorrichtung 26 ausgebildet. In diesem Fall ist das über die Mantelfläche des annähernd zylindrischen Aufnahmekörpers 6 ausschwenkbare Anschlagelement 34 der Begrenzungsvorrichtung 26 durch wenigstens einen haken- bzw. L-förmigen Schwenkarm 47 gebildet. Insbesondere sind zwei Schwenkarme 47 vorgesehen, welche um jeweils eine zugeordnete Schwenkachse 35 verdrehbar gelagert und nahe den seitlichen Begrenzungswänden der Einführöffnung 9 angeordnet sind.

Anstelle der Ausbildung einer bolzenartigen Schwenkachse 35 als Drehachse ist es selbstverständlich auch möglich, das bzw. die Anschlagelement(e) 34 mittels einem sogenannten Filmscharnier gegenüber dem Aufnahmekörper 6 ausschwenkbar zu gestalten. Das Anschlagelement 34 und die Schwenkachse 35 können dabei aus Kunststoff oder aus einem metallischen Werkstoff hergestellt sein. Diese Komponenten können somit hohen mechanischen Beanspruchungen standhalten, so daß eine relativ robuste Leseeinheit 39 geschaffen werden kann.

Gemäß einer bevorzugten Ausführungsform sind zwei Schwenkarme 47 ausgebildet, deren Anschlagelemente 34 in der Aktivstellung 28 - gemäß Fig. 5 - an den einander nächstliegenden Eckbereichen eines der Leseeinheit 39 zugeführten Informationsträgers 2 anliegen.

Die Begrenzungsvorrichtung 26 bzw. die einzelnen Anschlagelemente 34 oder Schwenkarme 47 werden bevorzugt kontinuierlich in die in Fig. 4 dargestellte, gegenüber den Außenumgrenzungen bzw. Mantelflächen des Aufnahmekörpers 6 zumindest weitgehendst eingezogene Ruhe- bzw. Ausgangsposition 27 gedrängt. In dieser Ausgangs- bzw. Ruheposition 27 sind wesentliche Abschnitte oder Teilbereiche der Anschlagelemente 34 innerhalb der Einführöffnung 9 im Aufnahmekörper 6 plaziert.

Bevorzugt ist wenigstens ein Federmittel 48 ausgebildet, über welches das wenigstens eine Anschlagelement 34 der Begrenzungsvorrichtung 26 federbelastet in die Ausgangsposition 27 gedrückt ist. Das Federmittel 48 kann dabei durch eine sogenannte Teller- oder auch durch eine Schraubenfeder gebildet sein. Alternativ dazu ist es auch möglich, als Federmittel 48 einen gummielastischen Block oder dgl. vorzusehen, welcher an einer Widerlagerfläche des Anschlagelementes 34 bzw. des Schwenkarms 47 anliegt und dabei eine Kraftwirkung ausübt, die das Anschlagelement 34 bzw. den Schwenkarm 47 in die eingefahrene Stellung drängt. Es ist aber auch möglich, ein gummielastisches Band vorzusehen, mit welchem das Anschlagelement 34 in die in Fig. 4 gezeigte Stellung gezogen wird.

Alternativ oder zusätzlich zu diesen Federmitteln 48 können auch Rastelemente 49 vorgesehen sein, mit welchen die Anschlagelemente 34 gesichert in der Ausgangsposition 27 und/oder in der Aktivstellung 28 gehaltert werden. Im einfachsten Fall sind diese Rastelemente 49 durch warzenförmige Erhebungen gebildet, welche im Verstellbereich der Schwenkarme 47 bzw. des Anschlagelementes 34 angeordnet sind. Mittels dieser Rastelemente 49 ist gewährleistet, daß das Anschlagelement 34 bzw. der Schwenkarm 47 in der jeweiligen Sollstellung zuverlässig verharrt und erst bei Überschreiten einer vorbestimmten Verstellkraft über das Rastelement 49 hinwegbewegt wird und in eine andere Position bzw. Stellung überführt werden kann bzw. durch die wirkende Federkraft in eine andere Position verstellt wird. Bei der Ausbildung wenigstens eines Schnapp- bzw. Rastelementes 49 ist vorteilhaft, daß die Begrenzungsvorrichtung 26 ausgeklappt werden kann und im ausgeklappten Zustand in der Aktivstellung 28 verharrt, so daß aufeinanderfolgend beispielsweise mehrere Informationsträger 2 zugeführt werden können, ohne daß jeweils die Begrenzungsvorrichtung 26 bewegt werden muß. Durch einfaches Um- bzw. Einklappen der Schwenkarme 47 per Fingerdruck kann dann wieder die kompakte und gegebenenfalls ebenso über entsprechende Rastelemente 49 gesicherte Ruhestellung der Begrenzungsvorrichtung 26 eingenommen werden.

Die Federmittel 48 und Rastelemente 49 können dabei kombiniert als auch wahlweise eingesetzt werden. Als Rastelement 49 eignen sich warzenförmige Erhebungen und/oder korrespondierende Vertiefungen bzw. Schaltnocken, Federzungen, Raststifte und ähnliche, in vielfältigen Ausführungen aus dem Stand der Technik bekannte Elemente.

Bevorzugt sind die Rastelemente 49 im Schwenkbereich eines Schwenkarmes 47 und zwar nahe dessen Lagerstelle bzw. Schwenkachse 35 ausgebildet.

Die Aktivierung der Begrenzungsvorrichtung 26 kann dabei durch Ergreifen der Anschlagelemente 34 bzw. Schwenkarme 47 manuell durch einen Benutzer erfolgen, oder aber auch mit der Einführbewegung eines Informationsträgers 2 gekoppelt werden. D.h., daß beim Einführen des entsprechenden Informationsträgers 2 in die Einführöffnung 9 die Begrenzungsvorrichtung 26 automatisch in die Aktivstellung 28 bewegt wird, indem die Schwenkarme 47 gegenüber dem Gehäuse bzw. dem Aufnahmekörper 6 zwangsweise ausklappen oder ausfahren. Die Zuführbewegung des Informationsträgers 2 ist dabei also mit der Ausschwenkbewegung der Schwenkarme 47 bzw. der Anschlagelemente 34 bewegungsgekoppelt. Es ist dabei lediglich darauf zu achten, daß die von eventuellen Federmitteln 48 und/oder von Rastelementen 49 auf die Schwenkarme 47 einwirkenden Haltekräfte durch die Einschiebbewegung eines geeigneten Informationsträgers 2 problemlos überwunden werden können.

Hierzu sind die in Draufsicht L- bzw. hakenförmigen Schwenkarme 47 in der Ruhe- oder Ausgangsposition 27 derart angeordnet, daß deren von den beiden Schenkeln eingeschlossener Bereich zumindest großteils innerhalb der Einführöffnung 9 liegt. Ein erforderlicher Schwenkbereich für die Anschlagelemente 34 bzw. Schwenkarme 47 kann je nach Anordnung der Schwenkachse 35 60° bis 120°, im Regelfall in etwa 90°, betragen. Die auf die Kartenebene bezogene L-Form des Schwenkarmes 47 mit der Schwenkachse 35 in einem Endbereich eines der beiden Schenkel begünstigt dabei, daß die Zuführbewegung des Informationsträgers 2 mit der Ausstellbewegung der Begrenzungsvorrichtung 26 bzw. der Schwenkarme einhergeht.

Die in den Fig. 1 bis 5 gezeigte Begrenzungsvorrichtung 26 kann für kartenförmige Informationsträger 2 mit der Größe einer Smart-Card bzw. im ISO-Format ausgebildet sein, oder aber für dazu vergleichsweise kleinformatigere Informationsträger 2, insbesondere für sogenannte SIM-Karten, vorgesehen sein. Wesentliche Änderungen sind hierbei nur in der Größe der Einführöffnung 9 und hinsichtlich der Dimensionierung und Anordnung der Anschlagelemente 34 vorzunehmen.

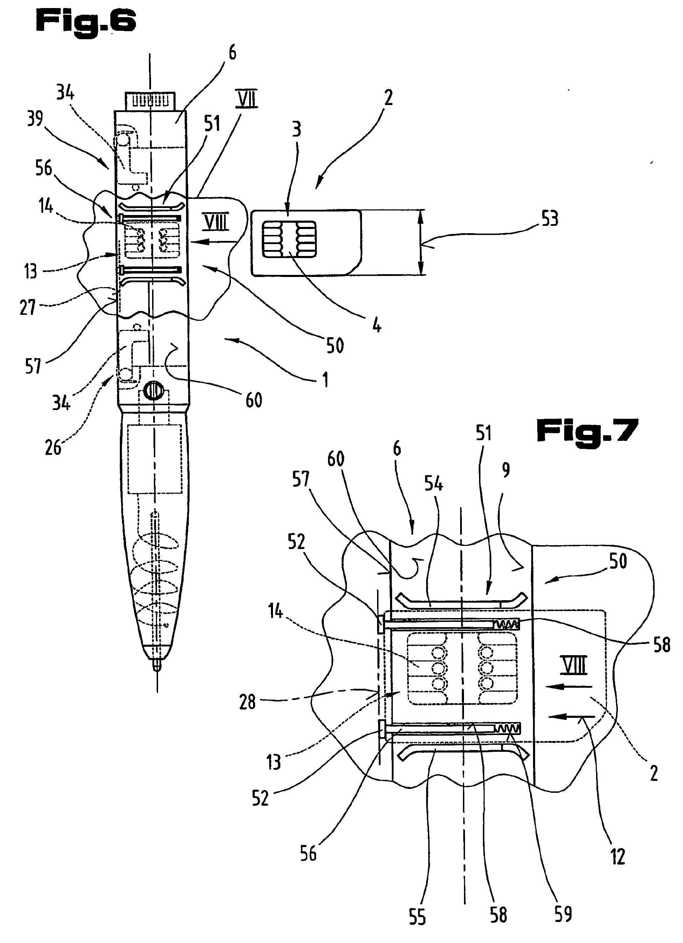

In den Fig. 6 bis 8 ist eine andere Ausgestaltung, die nicht Teil der Erfindung ist, der Leseeinheit 39 gezeigt. Die vorhergehenden Beschreibungen sind dabei sinngemäß auf gleiche Teile mit gleichen Bezugszeichen übertragbar.

Bei dieser Ausführungsform der Leseeinheit 39 bzw. Kontaktiereinheit 1 ist wesentlich, daß wahlweise großformatige Informationsträger 2 im standardisierten ISO-Format bzw. sogenannte Smart-Cards als auch vergleichsweise kleinformatigere Informationsträger 2 in Form von sogenannten SIM-Karten zuführbar sind.

Hierfür umfaßt die Leseeinheit 39 neben der zuvor beschriebenen Begrenzungsvorrichtung 26 bzw. den demgemäßen Anschlagelementen 34 für einen großformatigen Informationsträger 2 zusätzlich wenigstens ein Positioniermittel 50 für einen kartenförmigen Informationsträger 2 im vergleichsweise kleineren SIM-Format. Dieses Positioniermittel 50 umfaßt wenigstens eine Führungsvorrichtung 51 und/oder wenigstens ein verstellbar gelagertes Positionierelement 52 für einen vergleichsweise kleinformatigeren Informationsträger 2.

Diese Positioniermittel 50 kommen insbesondere dann zur Wirkung, wenn der Leseeinheit 39 ein kleinformatiger Informationsträger 2 zugeführt wird. Sofern jedoch der Leseeinheit 39 ein vergleichsweise großformatiger Informationsträger 2 in Form einer Smart-Card, insbesondere einer sogenannten Chipkarte zugeführt wird, kommen diese im speziellen für eine SIM-Karte vorgesehenen Positioniermittel 50 nicht zur Geltung.

Die Führungsvorrichtung 51 ist durch wenigstens eine, im konkreten Fall durch zwei, im wesentlichen in einer Breite 53 einer SIM-Karte zueinander beabstandete Führungsleisten 54, 55 gebildet. Diese Führungsleisten 54, 55 der Führungsvorrichtung 51 gewährleisten, daß die SIM-Karte bzw. der kleinformatige Informationsträger 2 exakt parallel zur Zuführrichtung - gemäß Pfeil 12 - zur Kontaktvorrichtung 13 der Leseeinheit 39 zuführbar ist. Insbesondere ermöglicht die Führungsvorrichtung 51 eine lineare, verdrehgesicherte und exakt ausgerichtete Zuführung des kleinformatigen Informationsträgers 2 relativ zu den Kontaktelementen 14 der gehäuseseitigen Kontaktvorrichtung 13, obwohl die schlitzförmige Einführöffnung 9 für vergleichsweise großformatige Informationsträger 2 dimensioniert ist. Die Führungsvorrichtung 51 für eine zu verarbeitende SIM-PlugIn-Karte ist dabei innerhalb der schlitzförmigen Einführöffnung 9, welche zur Zufuhr eines vergleichsweise großformatigeren Informationsträgers 2 dimensioniert ist, angeordnet bzw. ausgebildet.

Ein die ordnungsgemäße Kontaktierungsposition vorgebendes Positionierelement 52 des Positioniermittels 50 für kleinformatige Informationsträger 2 bzw. für in strichlierten Linien angedeutete SIM-Karten ist durch wenigstens einen verstellbar gelagerten Anschlagarm 56 gebildet. Insbesondere ist ein derartiger Anschlagarm 56 sowohl in als auch entgegen der Zuführrichtung - gemäß Pfeil 12 - verstellbar gelagert und dabei gegenüber der auf die Darstellung gemäß Fig. 6 bezogenen linken Begrenzungskante bzw. Außenbegrenzung 57 des Aufnahmekörpers 6 ausfahrbar. Wie am besten aus Fig. 7 ersichtlich ist, sind im konkreten Ausführungsbeispiel zwei Anschlagarme 56 mit jeweils einer Anschlagnase für den kleinformatigen Kartenkörper vorgesehen. Diese Anschlagarme 56 sind in einer Führungsnut 58 gelagert und in als auch entgegen der Zuführrichtung - gemäß Pfeil 12 - , also quer zur Längserstreckung des Aufnahmekörpers 6, verstellbar.

Bevorzugt ist den Anschlagarmen 56 wenigstens ein Federelement 59, beispielsweise eine Schraubenfeder, zugeordnet, über welche die Anschlagarme 56 in die in Fig. 6 dargestellte Ausgangsposition 27 innerhalb der Einführöffnung 9 gedrängt werden.

Anstelle zwei linear verstellbare Anschlagarme 56 vorzusehen, ist es selbstverständlich auch möglich, lediglich einen Stell- bzw. Anschlagarm 56 auszubilden, mit welchem die Einschubtiefe bzw. die maximale Einschubweite des kleinformatigen Informationsträgers 2 bzw. der SIM-Karte relativ zur Einführöffnung 9 bzw. relativ zur Kontaktvorrichtung 13 begrenzt werden kann.

Anstelle linear verstellbare Anschlagarme 56 vorzusehen, ist es selbstverständlich auch möglich, verschwenkbare, beispielsweise gegenüber der Einführöffnung 9 ausklappbare bzw. ausdrehbare Positionierelemente 52 vorzusehen, damit der kleinformatige Informationsträger 2 bzw. die SIM-Karte nur bis zur Kontaktposition einschiebbar ist.

Bevorzugt ist das Positionierelement 52 bzw. der Anschlagarm 56 via dem kleinformatigen Informationsträger 2 ausfahr- bzw. ausklappbar, wenn ein solcher Informationsträger 2 der Leseeinheit 39 zugeführt wird. Alternativ zu dieser zwangsgekoppelten Verstellbewegung des Positionierelementes 52 durch die SIM-Karte ist es aber auch möglich, eine manuelle Verstellung bzw. Aktivierung der Positionierelemente 52 vorzusehen. Auch diesen zusätzlichen Positionierelementen 52 für eine SIM-Karte können Rastmittel vorgesehen sein, welche die Positionierelemente 52 in der Ruhe- bzw. Ausgangsposition 27 halten und/oder in der in Fig. 7 dargestellten, ausgefahrenen Aktivstellung 28 vorübergehend haltern bzw. sichern.

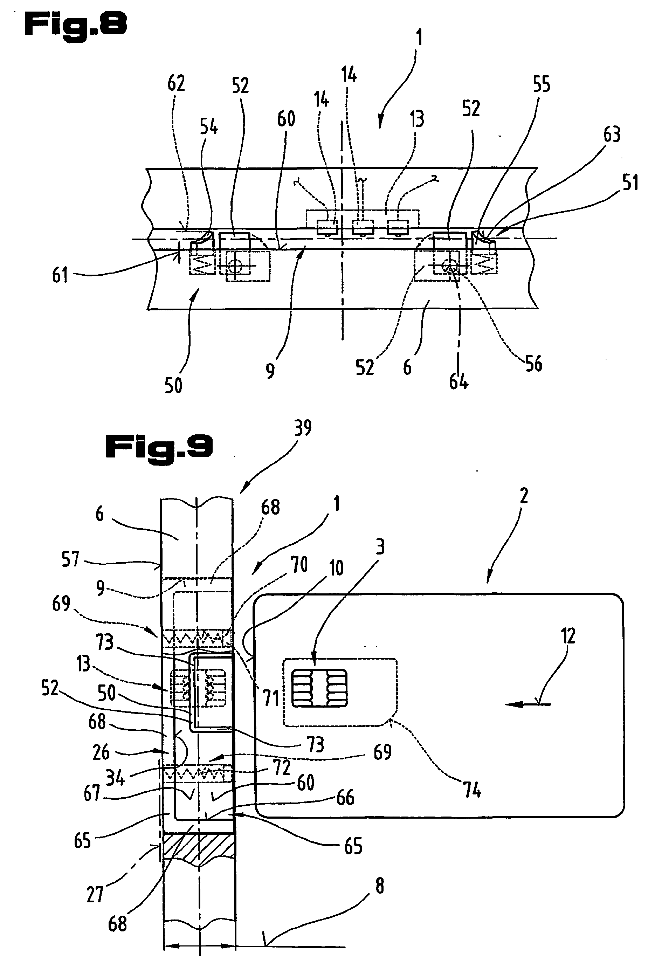

Um die Leseeinheit 39 bzw. die Kontaktiereinrichtung 1 wahlweise für SIM-Karten und für Smart-Cards verwenden zu können, ist - wie am besten aus Fig. 8 ersichtlich ist - wenigstens eines der Positioniermittel 50 in eine inaktive Stellung versetzbar. Insbesondere ist die seitliche Führungsvorrichtung 51 für einen kleinformatigen Informationsträger 2 innerhalb der Einführöffnung 9 bezugnehmend auf eine Auflageebene 60 für einen Informationsträger 2 in Vertikalrichtung - gemäß Pfeil 61 - zu dieser Auflageebene 60 verstellbar. D.h. die Führungsleisten 54, 55 sind von der in Fig. 8 dargestellten ausgefahrenen bzw. erhabenen Stellung 62 in eine nicht dargestellte, abgesenkte Stellung überführbar. In der abgesenkten Stellung der Führungsvorrichtung 51 bzw. der Führungsleisten 54, 55 schließen diese im wesentlichen bündig mit der Auflageebene 60 für einen Informationsträger 2 ab. Die Führungsvorrichtung 51 bzw. die Führungsleisten 54, 55 ist/sind dabei federbelastet in die in Fig. 8 dargestellte, ausgefahrene Stellung 62 gedrängt.

Anlaufschrägen 63 an den Führungsleisten 54, 55 gewährleisten, daß ein großformatiger Informationsträger 2 mühelos in die Einführöffnung 9 eingeschoben bzw. eingesteckt werden kann und dabei die Führungsleisten 54, 55 für den kleinformatigen Informationsträger 2 in die abgesenkte, inaktive Stellung überführt werden.

Anstelle einer linearen oder verschwenkenden Verstellung der Positionierelemente 52 bzw. der Führungsleisten 54, 55 ist es auch möglich, eine durch Materialverformung erzielte Deaktivierung und nachfolgende Rückstellung der Begrenzungs- bzw. Führungsfunktion der Positioniermittel 50 für einen kleinformatigen Informationsträger 2 vorzusehen. Insbesondere kann beim Aufbringen einer ausreichend hohen Zuführkraft auf einen großformatigen Informationsträger 2 das entsprechende Positioniermittel 50 inaktiv geschaltet und daraufhin der großformatige Informationsträger 2 bis zur jeweiligen Kontaktposition eingeschoben werden. An der jeweiligen durch die Positioniermittel 50 und/oder durch die Begrenzungvorrichtung 26 definierten End- bzw. Sollposition kontaktiert dann das Kontaktfeld 4 des jeweiligen Informationsträgers 2 exakt mit den entsprechenden Kontaktelementen der Kontaktvorrichtung 13 in der Leseeinheit 39.

Beispielsweise kann das Positionierelement 52, welches zur Begrenzung der Einschubweite in die Einführöffnung 9 dient, deaktiviert werden, indem eine Verdrehung desselben um eine in Zuführrichtung - gemäß Pfeil 12 - verlaufende Achse 64 erfolgt. Hierfür ist der Anschlagarm 56 bevorzugt zylindrisch bzw. wellenförmig ausgebildet, so daß das auf dem Anschlagarm 56 angeordnete Positionierelement 52 in die in strichlierten Linien dargestellte inaktive Stellung überführt werden kann. In dieser inaktiven Stellung des verstellbaren Positionierelementes 52 kann dann ein großformatiger Informationsträger 2 vergleichsweise weiter durch die Einführöffnung 9 hindurchgesteckt werden, um so mit der Kontaktvorrichtung 13 ordnungsgemäß kontaktieren zu können.

Durch die Möglichkeit zur automatischen oder manuellen Verstellung der Positioniermittel 50 für den kleinformatigen Informationsträger 2 in eine inaktive Stellung und/oder zurück ist gewährleistet, daß sowohl kleinformatige Informationsträger 2 im SIM-Format als auch großformatigere Informationsträger 2 mit Smart-Card-Abmessungen wechselweise von der erfindungsgemäßen Leseeinheit 39 verarbeitbar sind.

Es ist auch möglich, eine Art Aufnahmeschlitten für einen groß- und/oder kleinformatigen Informationsträger 2 am Gehäuse bzw. Aufnahmekörper 6 vorzusehen. Dieser Aufnahmeschlitten ist dabei innerhalb der Einführöffnung 9 relativ zum stab- bzw. stiftförmigen Aufnahmekörper 6 verstellbar gelagert und nimmt zumindest teilweise eingebettet bzw. gehaltert den jeweiligen Informationsträger 2 darin auf. Ein derartiges schlittenartiges Positioniermittel 50 vereint quasi die Führungsvorrichtung 51 und das Positionierelement 52 in einer Komponente. Ein solches kombiniertes Positioniermittel 50 ist schematisch in den Fig. 9 bis 11 veranschaulicht worden.

In den Fig. 9 bis 11 ist eine erfindungsgemäße Ausführungsform der Kontaktiereinrichtung 1, welche gleichfalls in einer stiftförmigen, elektronischen Leseeinheit 39 implementiert sein kann, gezeigt. Auch hierbei ist das Gehäuse bzw. der Aufnahmekörper 6 für die Kontaktiereinrichtung 1 durch relativ großes Längen- zu Breitenverhältnis annähernd profil- bzw. stabförmig ausgebildet.

Die Begrenzungsvorrichtung 26 zur Limitierung der Durchsteckweite 29 für einen zu verar beitenden Informationsträger 2 gegenüber dem Aufnahmekörper 6 für die Kontaktvorrichtung 13 ist dabei durch einen Aufnahmeschlitten 65 gebildet. Dieser Aufnahmeschlitten 65 ist quer zur Längserstreckung des Aufnahmekörpers 6 verstellbar gelagert, und dazu vorgesehen, zumindest Teilabschnitte eines zu bearbeitenden Informationsträgers 2 aufzunehmen. Insbesondere ist der Aufnahmeschlitten 65 mit einer Vertiefung 66 versehen, in welche die Breitseite 10 des kartenförmigen Informationsträgers 2 weitgehendst spielfrei eingesetzt werden kann. Der Aufnahmeschlitten 65 ist dabei bevorzugt innerhalb der Einführöffnung 9 bzw. innerhalb eines schlitzförmigen Durchbruches durch den Aufnahmekörper 6 angeordnet und gegenüber diesem linear verstellbar. Insbesondere ist der Aufnahmeschlitten 65 aus diesem schlitzförmigen Durchbruch bzw. der demgemäßen Einführöffnung 9 aus- und wieder einführbar. Diese Aus- und Einfahrbewegung gegenüber dem Gehäuse bzw. Aufnahmekörper 6 kann dabei mit der Zuführung - gemäß Pfeil 12 - eines kartenförmigen Informationsträgers 2 gekoppelt sein und/oder auch durch Ergreifen des Aufnahmeschlittens 65 manuell erfolgen. Der Aufnahmeschlitten 65 kann dabei eine im wesentlichen ebenflächige Auflageplatte 67 umfassen, in dessen Randzonen wenigstens bereichsweise stegförmige Erhöhungen 68 angeordnet sind, die als Stoß- bzw. Anschlagleisten für die Kantenbereiche eines zuzuführenden, großformatigen Informationsträgers 2 in Art einer Smart-Card dienen.

Der Aufnahmeschlitten 65 ist jedenfalls im Durchbruch durch den Aufnahmekörper 6 quer zu dessen Längsrichtung verstell-, insbesondere verschiebbar. Dabei können sich Seitenbereiche des Aufnahmeschlittens 65 an den Wandungen des Durchbruches bzw. der Einführöffnung 9 gleitbeweglich abstützen und/oder es kann eine eigene Führungsvorrichtung 69 vorgesehen sein, welche die Relativverstellung zwischen dem Aufnahmeschlitten 65 für den Informationsträger 2 gegenüber dem Aufnahmekörper 6 mit der feststehend angeordneten Kontaktvorrichtung 13 ermöglicht. Die Führungsvorrichtung 69 umfaßt bevorzugt wenigstens eine Führungsnut 70 und wenigstens einen in dieser Führungsnut 70 verstellbar gelagerten Führungszapfen 71. Bevorzugt ist ein Federmittel 72 in Form einer Spiralfeder oder einer Blattfeder vorgesehen, mit welchem der Aufnahmeschlitten 65 in die in Fig. 9 dargestellte Ruhe- bzw. Ausgangsposition 27 gedrängt ist. Selbstverständlich ist es aber auch möglich, derartige Federkräfte durch Auswahl entsprechender Materialelastizitäten bzw. durch federnd gelagerte Zungen aus Kunststoff aufzubringen.

Selbstverständlich ist es auch möglich, den Aufnahmeschlitten 65 wenigstens teilweise taschenartig auszubilden und dabei den Stirnendbereich des kartenförmigen Informationsträgers 2 mit dem Datenspeicherelement bzw. Chip 3 exakt geführt in die taschenartige Ausnehmung des Aufnahmeschlittens 65 einzuführen.

Wesentlich ist, daß der Aufnahmeschlitten 65 hinsichtlich seiner Ausstellweite gegenüber dem Aufnahmekörper 6 derart begrenzt ist, daß der Chip 3 eines in den Aufnahmeschlitten 65 eingesetzten Informationsträgers 2 in der vollständig ausgefahrenen Position exakt mit der gehäuse- bzw. aufnahmekörperseitig fixierten Kontaktvorrichtung 13 elektrisch leitend kontaktieren kann.

Gemäß einer vorteilhaften, optionalen Weiterbildung kann der Aufnahmeschlitten 65 zudem die Positioniermittel 50 für einen kleinformatigen Informationsträger 2, insbesondere wenigstens ein Positionierorgan 73, beispielsweise in Form einer Leiste bzw. Erhebung, umfassen, mit welchem ein kleinformatiger Informationsträger 2 in Form einer sogenannten SIM-Karte exakt gegenüber dem Aufnahmeschlitten 65 positioniert bzw. darin möglichst spielfrei eingeschoben werden kann. Diese Positionierorgane 73 sind dabei derart am Aufnahmeschlitten 65 angeordnet, daß beim Einsetzen eines kleinformatigen Informationsträgers und Zuführen desselben in das Gehäuse bzw. in den Aufnahmekörper 6 dessen Chip 3 mit der Kontaktvorrichtung 13 kontaktieren kann, welche auch zur Kontaktierung großformatiger Informationsträger 2 im standardisierten Smart-Card-Format vorgesehen ist. Die Höhe der Positionierorgane 73 ist dabei derart gewählt, daß ein großformatiger Informationsträger 2 problemlos in den Aufnahmeschlitten 65 eingeführt werden kann. Insbesondere können die von der Auflageplatte 67 vorstehenden Positionierorgane 73 derart niedrig gehalten werden, daß ein großformatiger Informationsträger 2 darüber hinweg geschoben werden kann und für vergleichsweise kleinformatigere Informationsträger 2 dennoch ein spürbarer Positionierfortsatz bzw. Anschlag vorliegt.

Alternativ ist es selbstverständlich auch möglich, eine an derartigen SIM-Karten ausgebildete Abschrägung 74 bzw. Positioniemase zur Sicherstellung der richtigen Zuführung des Informationsträgers 2 gegenüber dem Aufnahmeschlitten 65 heranzuziehen. Vorteilhaft ist bei der Ausgestaltung mittels Aufnahmeschlitten 65, daß die Einführöffnung 9 im auf die Zuführrichtung - gemäß Pfeil 12 - bezogenen Endbereich durch Stege bzw. Wandungen des Aufnahmeschlittens 65 weitgehendst verschlossen werden kann, wenn der Aufnahmeschlitten 65 die in Fig. 9 dargestellte Ruhe- bzw. Ausgangsposition 27 einnimmt. Dem Eindringen von Fremdkörpern bzw. Schmutz kann dadurch entgegengewirkt werden.

Anstelle einer Ausgestaltung des Aufnahmeschlittens 65 zur wahlweisen Verwendung von groß- und kleinformatigen Informationsträgern 2 ist es selbstverständlich auch möglich, den Aufnahmeschlitten 65 nur für ein bestimmtes Format von Informationsträgern 2 zu gestalten.

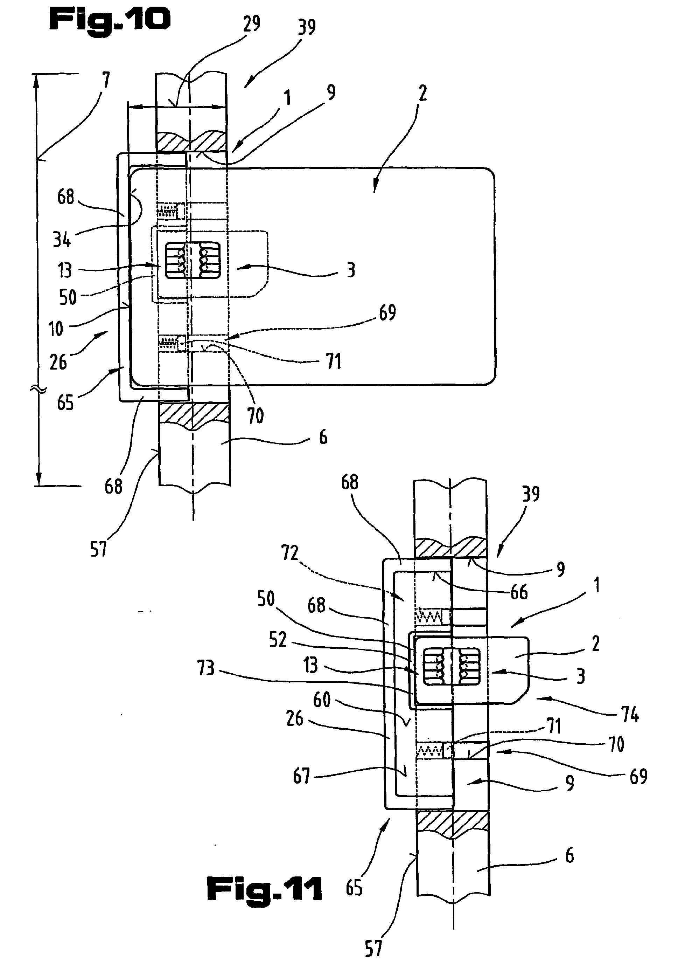

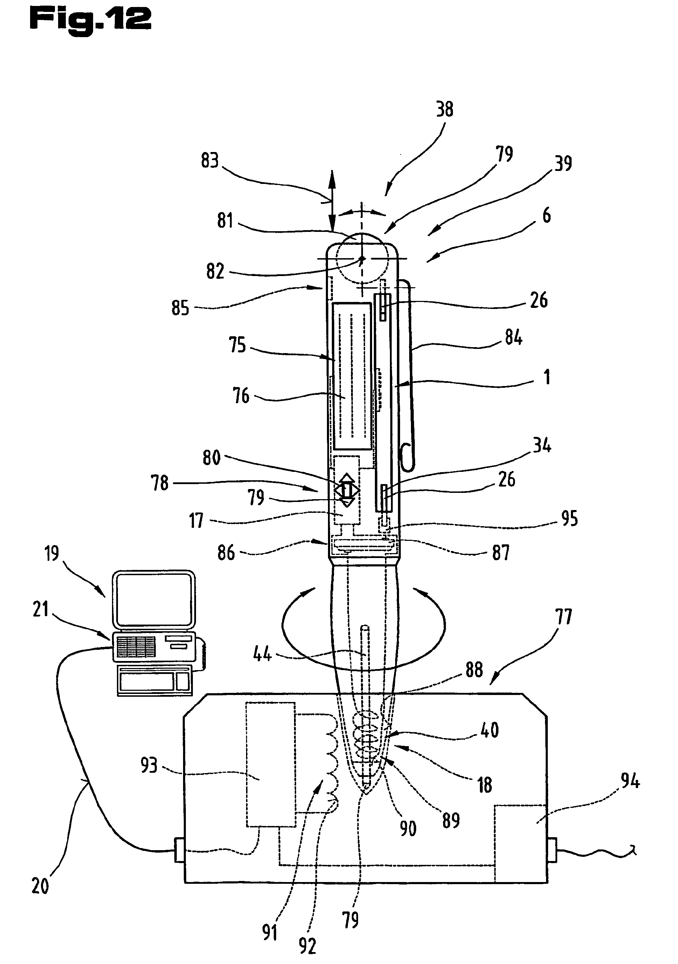

Entscheidend ist, daß der Aufnahmeschlitten 65 der Leseeinheit 39 beim Lesen von großformatigen Informationsträgern 2 gegenüber der Außenbegrenzung 57 bzw. Mantelfläche des Gehäuses bzw. Aufnahmekörpers 6 in etwa gleich weit wie beim Lesen von kleinformatigen Informationsträgern 2 vorragt, wie dies durch eine Zusammenschau der Fig. 10 und 11 deutlich erkennbar ist. Dies kann erreicht werden, indem das Positionierorgan 73 in Bezug zum Aufnahmeschlitten 65 in einer zum Chip einer Chipkarte adäquaten Relativposition angeordnet ist.

Selbstverständlich ist es auch möglich, wenigstens eine der Erhöhungen 68 am Aufnahmeschlitten 65 zusätzlich auch als Anschlag für den kleinformatigen Informationsträger 2 zu nutzen und durch zwei unterschiedliche Verschiebeweiten, welche bevorzugt durch zumindest ein Rastmittel erkenn- bzw. spürbar sind, eine exakte Positionierung der Kontaktflächen 4 des jeweiligen Chip 3 von im Format unterschiedlichen Informationsträgern 2 gegenüber der gehäuseseitig fixierten Kontaktvorrichtung 13 zu erzielen.

In Fig. 12 ist eine mögliche Weiterbildung der Leseeinheit 39 mit der Kontaktiereinrichtung 1 für kartenförmige Informationsträger - nicht dargestellt - gezeigt. Die vorhergehenden Beschreibungen sind dabei sinngemäß auf gleiche Teile mit gleichen Bezugszeichen übertragbar.

Auch hierbei ist das Gehäuse bzw. der Aufnahmekörper 6 für die Kontaktiereinrichtung 1 im wesentlichen stift- oder stabförmig ausgebildet und umfaßt u.a. die Begrenzungsvorrichtung 26 zur exakten Positionierung der Kontaktierungsflächen eines Informationsträgers relativ zur Tiefenrichtung des Durchbruches durch das Gehäuse bzw. den Aufnahmekörper 6. Im Besonderen ist diese Leseeinheit 39 als Schreibutensil 38, beispielsweise in Form eines Kugelschreibers mit einer Schreibmine 44, ausgebildet.

Zusätzlich umfaßt diese Leseeinheit 39 eine Anzeigeeinheit 75 zur visuell erfaßbaren Darstellung von Informationen bzw. Daten. Bevorzugt ist diese Anzeigeeinheit 75 durch ein ein- oder mehrzeiliges LCD-Display 76 gebildet. Selbstverständlich ist es auch möglich, die Anzeigeeinheit 75 durch beliebige, aus dem Stand der Technik bekannte Visualisierungselemente, beispielsweise durch Sieben-Segment-Anzeigen, LED-Anordnungen oder dgl. zu bilden.

Neben dieser optischen Ausgabevorrichtung ist es auch möglich, akustische Ausgabevorrichtungen, beispielsweise in Form von Summern, Lautsprechern oder dgl. an der Leseeinheit 39 vorzusehen, um damit akustische Signale, beispielsweise Piepstöne, Sprachinformationen oder dgl. auszugeben.

Ebenso umfaßt die stiftförmige Leseeinheit 39 eine Schnittstelle 18, insbesondere ein sogenanntes HOST-Interface zur bedarfsweisen Verbindung mit einer übergeordneten Rechnereinheit. In diesem Ausführungsbeispiel ist die Schnittstelle 18 drahtlos ausgebildet und zur Übertragung und/oder zum Empfang von Energie und/oder Daten in Bezug zu einer korrespondierenden Gegenstelle an einer Basisstation 77 vorgesehen. Diese Basisstation 77 bildet eine eigenständige Baueinheit, zu welcher die stiftförmige Leseeinheit 39 körperlich und/oder kommunikativ zuordenbar ist.

Zudem umfaßt die Leseeinheit 39 wenigstens eine Eingabevorrichtung 78 zur Eingabe von Daten und/oder zur Beeinflussung der Betriebszustände oder des Betriebsverhaltens der Leseeinheit 39 bzw. des integrierten Schaltkreises 17. Die Eingabevorrichtung 78 umfaßt dabei wenigstens ein von einem Benutzer betätigbares Bedienelement 79. Dieses Bedienelement 79 kann dabei als Schalter, Taster 80 und/oder als Auswahlrad 81 ausgebildet sein. Dieses wenigstens eine Bedienelement 79 in beliebiger Ausgestaltung dient jedenfalls zur Bedienung der Leseeinheit 39 bzw. zur Beeinflussung dessen Betriebszustände. Zusätzlich kann das jeweilige Bedienelement 79 zur Auswahl, Bestätigung oder zur Eingabe eines Codes, insbesondere eines PIN-Codes, vorgesehen sein.

Bei Ausgabe eines Bedienmenüs über die Anzeigeeinheit 75 können die Bedienelemente 79 zur Menüführung bzw. Menüsteuerung herangezogen werden, wodurch auch bei einer Vielzahl möglicher Funktionen der Leseeinheit 39 eine übersichtliche und einfache Bedienung ermöglicht ist.

Sofern als Bedienelement 79 ein Auswahlrad 81 ausgebildet ist, ist dieses bevorzugt in dem von der Schreibmine 44 abgewandten Endbereich der stiftförmigen Leseeinheit 39 angeordnet und anstelle des üblichen Betätigungselementes zum Aus- und Einfahren der Schreibmine 44 vorgesehen. Das Auswahlrad 81 kann dabei neben der durch einen gekrümmten Pfeil angedeuteten Drehbeweglichkeit um eine Drehachse 82 auch vertikal zu dessen Drehachse 82 verstellbar gelagert sein, wie dies durch den Doppelpfeil 83 veranschaulicht ist. Diese Vertikalbeweglichkeit gemäß Doppelpfeil 83 des Auswahlrades 81 wird bevorzugt zur Bestätigung bzw. zur Selektion einer bestimmten Funktion von aus einer Mehrzahl zur Verfügung stehender Auswahlmöglichkeiten genutzt. Dieses verdrehbar gelagerte Auswahlrad 81 hat somit auch die Funktion eines Bestätigungs- bzw. Eingabeelementes, wenn es gemäß Doppelpfeil 83 betätigt wird.

Unabhängig davon können aber auch Bedienelemente 79 in Form von Pfeil-Tasten angeordnet sein, welche funktional mit Cursor-Tasten vergleichbar sind.

Mittels der Anzeigeeinheit 75 und unter eventueller Verwendung der Bedienelemente 79 sind zumindest manche der im Datenspeicherelement eines zugeführten Informationsträgers hinterlegten Daten anzeig- bzw. visualisierbar. Insbesondere können über die Anzeigeeinheit 75 Restguthaben, Laufdauerbeschränkungen, Benutzerdaten, Transaktionsdaten, Daten zur Nutzungshistory oder sonstige für den jeweiligen Verwendungszweck und/oder Anwendungsbereich relevante Daten visualisiert werden.

Gemäß einer möglichen Weiterbildung der stiftförmigen Leseeinheit 39 ist die Spitze der Schreibmine 44 als Bedienelement 79 ausgebildet, wodurch die Leseeinheit 39 in Art des zuvor beschriebenen Zeigegerätes bzw. Rollballes bzw. als sogenannte "Mouse" verwendbar.

Alternativ ist es auch möglich, eine kombinierte optische Ausgabe- und Eingabevorrichtung in Art eines Touch-Screen an der Leseeinheit 39 vorzusehen. Dadurch kann die Zahl der Bedienelemente 79 in Form von Tasten bzw. Druckknöpfen am Gehäuse bzw. Aufnahmekörper 6 reduziert werden, so daß diese stiftförmige Leseeinheit 39 besonders kompakt ausgestaltet werden kann. Darüber hinaus kann ein hoher Bedienungskomfort der Leseeinheit 39 erzielt werden.

Zum sicheren Einstecken der als Schreibutensil 38 ausgebildeten Leseeinheit 39 kann am Gehäuse bzw. Aufnahmekörper 6 ein bei Schreibstiften an sich üblicher Haltebügel 84 zur Befestigung an Kleidertaschen von Sakkos oder dgl. angeordnet sein.

Gemäß einer möglichen Ausgestaltung der stiftförmigen Leseeinheit 39 kann diese auch wenigstens einen Sensor 85 zur Erfassung biometrischer Merkmale eines potentiellen Benutzers der Leseeinheit 39 umfassen. Dieser biometrische Sensor 85 kann dabei durch einen Fingerprintsensor zur Aufnahme von Fingerabdrücken gebildet sein, oder durch ein Mikrophon und einen nachgeschalteten Auswerteschaltkreis zur Erkennung von Stimmen und/oder zur Erkennung von Sprachtext realisiert sein. Ein derartiger elektronischer Auswerteschaltkreis ist bevorzugt Bestandteil des ebenso vom Gehäuse oder Aufnahmekörper 6 aufgenommenen, elektrischen Schaltkreises 17 der Leseeinheit 39.

Mittels diesem biometrischen Sensor 85 ist es ermöglicht zu überprüfen, ob die eine Verwendungsabsicht zeigende Person berechtigt ist, die Leseeinheit 39 zu benutzen, um damit verschiedene Funktionen auszuführen bzw. bestimmte Aktionen einzuleiten. Insbesondere kann über diesen Sensor 85 der jeweilige Benutzer der Leseeinheit 39 identifiziert und/oder authentifiziert werden. Unabhängig davon ist es selbstverständlich auch möglich, einen der Leseeinheit 39 zuführbaren kartenförmigen Informationsträger zur Identifizierung und/oder Authentifizierung des Anwenders heranzuziehen, und nach positivem Überprüfungsergebnis die Nutzungsberechtigung für die Leseeinheit 39 zu erteilen.

Gemäß einer möglichen Ausgestaltung kann auch ein Sicherheitsmodul in Form eines SAM-Modules in die Leseeinheit 39 integriert sein. Ein derartiges SAM-Modul (Security Access Module bzw. Security Application Module) ist bevorzugt durch einen in die Leseeinheit 39 fix eingebauten Elektronikschaltkreis gebildet, welcher Sicherheitsaufgaben wahrnimmt.

Die zuvor beschriebenen elektrischen bzw. elektronischen Komponenten, wie Anzeigeeinheit 75, Eingabevorrichtung 78, Bedienelement 79 und Sensor 85 sind mit dem zentralen, elektrischen Schaltkreis 17, welcher bevorzugt einen Mikrorechner umfaßt, leitungsverbunden. Dieser Mikrorechner kann dabei softwaregesteuert ausgebildet sein und den zentralen Controller der Leseeinheit 39 darstellen.

Die kompakte, tragbare Leseeinheit 39 umfaßt weiters wenigstens eine elektrochemische Spannungsquelle 86 in Form von Akkumulatoren 87 bzw. Batterien. Bevorzugt werden jedoch Akkumulatoren 87 eingesetzt, welche über eine geeignete Ladestation, insbesondere via die Basisstation 77, nach- bzw. aufladbar sind. Die elektrochemischen Spannungsquellen 86 sind bevorzugt auswechselbar im Gehäuse bzw. Aufnahmekörper 6 der Leseeinheit 39 angeordnet und können - wie schematisch dargestellt - durch sogenannte Knopfzellen gebildet sein. Selbstverständlich ist es aber auch möglich, handelsübliche, stabförmige Akkumulatoren 87 mit zylinderförmiger Gestalt zu verwenden. Batterien bzw. Akkumulatoren 87 mit zylindrischer Form eignen sich dabei besonders, in das Gehäuse bzw. den Aufnahmekörper 6 der Leseeinheit 39 auswechselbar integriert zu werden und dabei eine hohe elektrische Leistung zur Verfügung zu stellen.

Wie vorhergehend bereits erläutert, kann die Leseeinheit 39 einer baulich eigenständigen, als Tischgerät ausgebildeten Basisstation 77 zugeordnet werden. Diese Basisstation 77 weist eine Ausnehmung 88 auf, in welche ein Teilbereich der Leseeinheit 39 eingesteckt werden kann. Insbesondere ist der der Schreibmine 44 zugeordnete End- bzw. Spitzenbereich der stiftförmigen Leseeinheit 39 in die Ausnehmung 88 der Basisstation 77 einsteckbar. Mittels dieser Ausnehmung 88 wird eine Halterung bzw. Positionierung der Leseeinheit 39 gegenüber der Basisstation 77 erreicht. Die Ausnehmung 88 ist dabei in einem Oberflächenbereich der Basisstation 77 angeordnet und derart ausgerichtet, daß eine weitgehendst vertikale bzw. stehende Positionierung bzw. Halterung der Leseeinheit 39 gegeben ist.

Die draht- bzw. kontaktlose Schnittstelle 18 der Leseeinheit 39, welche durch eine Antenne 40 bzw. eine demgemäße Spule gebildet ist, befindet sich bei der Basisstation 77 zugeordneter Leseeinheit 39 weitgehendst innerhalb der Ausnehmung 88. Zur Übertragung und/oder zum Empfang von Daten und/oder elektrischer Energie zur bzw. von der Basisstation 77 umfaßt die Schnittstelle 18 wenigstens eine Sende- und/oder Empfangsvorrichtung 89 in Art einer Spule 90. Dieser Sende- und/oder Empfangsvornchtung 89 der Leseeinheit 39 ist in der Basisstation 77 eine korrespondierende Sende- und/oder Empfangsvorrichtung 91, insbesondere in Form einer weiteren Spule 92, zugeordnet. Die Sende- und/oder Empfangsvorrichtungen 89, 91 bzw. deren Spulen 90, 92 sind zum Empfang und/oder zur Aussendung elektromagnetischer Felder ausgebildet. Zwischen den Spulen 90, 92 kann dabei eine berührungslose Übertragungsstrecke zur Übertragung von Energie und/oder Daten aufgebaut werden. Die der Basisstation 77 zugeordnete Sende- und/oder Empfangsvorrichtung 91 ist bevorzugt nahe der Ausnehmung 88 plaziert bzw. ist die Ausnehmung 88 von der Spule 92 wenigstens teilweise umgeben.

Die in der Basisstation 77 integrierte Sende- und/oder Empfangsvorrichtung 91 ist mit einem im Gehäuse der Basisstation 77 angeordneten, elektronischen Schaltkreis 93 verbunden. Dieser elektronische Schaltkreis 93 der Basisstation 77 dient zur Auswertung und/oder Umsetzung der zu übertragenden elektrischen Signale bzw. Daten zwischen der Leseeinheit 39 und einer übergeordneten, elektronischen Recheneinheit 19. Hierzu ist der Schaltkreis 93 bzw. die Basisstation 77 über das Kabel 20 mit einer geeigneten Schnittstelle 21 der Recheneinheit 19 verbunden, wie dies zuvor bereits erläutert wurde. Die Übertragungsstrecke zwischen der Recheneinheit 19 und der Basisstation 17 ist dabei bevorzugt als bidirektionale Datenübertragungsstrecke aufgebaut. Dieser Schaltkreis 93 kann auch als Interface-Elektronik zwischen der Leseeinheit 39 und der übergeordneten Recheneinheit 19 bezeichnet werden.

Weiters umfaßt die Basisstation 77 ein Netzteil 94 zur Umsetzung der von einem öffentlichen Energieversorgungsunternehmen bereitgestellten elektrischen Energie auf ein vom Schaltkreis 93 benötigtes Niveau. Das Netzteil 94 ist dabei ausgangsseitig mit dem Schaltkreis 93 verbunden und eingangsseitig über eine Kabelverbindung an ein öffentliches Energieversorgungsnetz anschaltbar.

Um den Energieverbrauch der Leseeinheit 39 reduzieren zu können, kann in der Leseeinheit 39 wenigstens eine Schaltvorrichtung 95 oder ein entsprechender Sensor angeordnet sein, mit welcher das Vorhandensein bzw. die ordnungsgemäße Positionierung eines zugeführten Informationsträgers 2 erfaßt werden kann. Diese Schaltvorrichtung 95 bzw. dieser Sensor ist mit der Spannungsquelle 86 gekoppelt und leitet erst bei Vorliegen einer exakten Positionierung eines Informationsträgers 2 eine Energieversorgung der elektrischen Komponenten der Leseeinheit 39 ein.

Wesentlich ist, daß unter Einbeziehung der Basisstation 77 eine Datenkommunikation zwischen der Leseeinheit 39 bzw. zwischen dem Datenspeicherelement oder Chip eines eingesetzten, kartenförmigen Informationsträgers und einer übergeordneten Recheneinheit 19, wie z.B. einem HOST-System bzw. einem PC, erfolgen kann. Zudem kann über die elektromagnetischen Wechselfelder der Basisstation 77 eine Auf- bzw. Nachladung der Akkumulatoren 87 bewirkt werden.

Der Ordnung halber sei abschließend darauf hingewiesen, daß zum besseren Verständnis des Aufbaus der Kontaktiereinrichtung 1 und der Leseeinheit 39, diese bzw. deren Bestandteile teilweise unmaßstäblich und/oder vergrößert und/oder verkleinert dargestellt wurden.

### Bezugszeichenaufstellung

- 1: Kontaktiereinrichtung
- 2: Informationsträger
- 3: Chip
- 4: Kontaktfeld
- 5: Kontaktierungsfläche

- 6: Aufnahmekörper
- 7: Länge
- 8: Breite
- 9: Einführöffnung
- 10: Breitseite (der Karte)

- 11: Längserstreckung
- 12: Pfeil (Zuführrichtung)
- 13: Kontaktvorrichtung
- 14: Kontaktelement
- 15: Schnittstelle

- 16: Leitung
- 17: Schaltkreis
- 18: Schnittstelle
- 19: Recheneinheit
- 20: Kabel

- 21: Schnittstelle (der Recheneinheit)
- 22: Steckverbindungsvorrichtung
- 23: Kommunikationsmittel
- 24: Kommunikationsnetzwerk
- 25: Modem

- 26: Begrenzungsvorrichtung
- 27: Ausgangsposition
- 28: Aktivstellung
- 29: Durchsteckweite
- 30: Überstand

- 31: Erstreckung
- 32: Abstand
- 33: Begrenzung
- 34: Anschlagelement
- 35: Schwenkachse

- 36: Halteorgan
- 37: Länge
- 38: Schreibutensil
- 39: Leseeinheit
- 40: Antenne

- 41: USB-Schnittstelle
- 42: Kontaktfahne
- 43: Betätigungselement
- 44: Schreibmine
- 45: Steckbuchse

- 46: Schreibspitze
- 47: Schwenkarm
- 48: Federmittel
- 49: Rastelement
- 50: Positioniermittel

- 51: Führungsvorrichtung
- 52: Positionierelement
- 53: Breite
- 54: Führungsleiste
- 55: Führungsleiste

- 56: Anschlagarm
- 57: Außenbegrenzung
- 58: Führungsnut
- 59: Federelement
- 60: Auflageebene

- 61: Pfeil
- 62: Stellung (ausgefahren)
- 63: Anlaufschräge
- 64: Achse
- 65: Aufnahmeschlitten

- 66: Vertiefung
- 67: Auflageplatte
- 68: Erhöhung
- 69: Führungsvorrichtung
- 70: Führungsnut

- 71: Führungszapfen
- 72: Federmittel
- 73: Positionierorgan
- 74: Abschrägung
- 75: Anzeigeelement

- 76: LCD-Display
- 77: Basisstation
- 78: Eingabevorrichtung
- 79: Bedienelement
- 80: Taster

- 81: Auswahlrad
- 82: Drehachse
- 83: Doppelpfeil
- 84: Haltebügel
- 85: Sensor

- 86: Spannungsquelle
- 87: Akkumulator
- 88: Ausnehmung
- 89: Sende- und/oder Empfangsvorrichtung
- 90: Spule

- 91: Sende- und/oder Empfangsvorrichtung
- 92: Spule
- 93: Schaltkreis
- 94: Netzteil
- 95: Schaltvorrichtung

## Patentansprüche

1. Kontaktiereinrichtung (1) für kartenförmige Informationsträger (2) welche mit einem elektronischen Datenspeicherelement versehen sind, das eine kontaktbehaftete Schnittstelle mit mehreren elektrischen Kontaktierungsflächen (5) aufweist, umfassend ein Gehäuse oder einen Aufnahmekörper (6) zur zumindest teilweisen Aufnahme oder Halterung einer Kontaktvorrichtung (13) mit mehreren block- bzw. matrixartig angeordneten Kontaktelementen (14), die mit den Kontaktierungsflächen (5) eines Informationsträgers (2) in Kontaktverbindung versetzbar sind und wenigstens eine gegenüber dem Gehäuse oder Aufnahmekörper (6) verstellbare Begrenzungsvorrichtung (26), die wenigstens ein Anschlagelement (34) für Kantenbereiche eines zuführbaren Informationsträgers (2) aufweist, um die Kontaktierungsflächen (5) eines zuzuführenden Informationsträgers (2) relativ zu den Kontaktelementen (14) kontaktierend positionieren zu können, wobei eine Länge (7) des Gehäuses oder Aufnahmekörpers (6) größer bemessen ist als eine Breitenabmessung eines zuführbaren, kartenförmigen Informationsträgers (2) im Format einer standardisierten Smart-Card und eine schlitzförmige Einführöffnung (9) für einen derartigen Informationsträger (2) als Durchbruch durch das Gehäuse oder den Aufnahmekörper (6) ausgebildet ist, welcher quer zur Längserstreckung des Gehäuses oder Aufnahmekörpers (6) verläuft, **dadurch gekennzeichnet, daß** eine in Zuführrichtung (12) eines derartigen Informationsträgers (2) gemessene Breite (8) des Gehäuses oder Aufnahmekörpers (6) im deaktivierten Zustand der Begrenzungsvorrichtung (26) in etwa der in gleicher Richtung gemessenen Erstreckung (31) der Kontaktvorrichtung (13) oder in etwa der in gleicher Richtung gemessenen Erstreckung (31) der Kontaktierungsflächen (5) eines derartigen Informationsträgers (2) entspricht und das Anschlagelement (34) auf einem in Richtung des Durchbruches verstellbaren Aufnahmeschlitten (65) für kartenförmige Informationsträger (2) ausgebildet ist, sodaß das Anschlagelement (34) gegenüber einer Außenbegrenzung (57) oder Mantelfläche des Gehäuses oder Aufnahmekörpers (6) in Richtung des Durchbruches im Gehäuse oder Aufnahmekörper (6) aus dem Durchbruch heraus begrenzt verstellbar ist und daß in einer Auflageebene (60) für einen Informationsträger (2) mit Smart-Card-Format wenigstens ein Positioniermittel (50) zur Positionierung eines vergleichsweise kleineren kartenformigen Informationsträgers (2) mit elektronischem Datenspeicherelement ausgebildet ist.

2. Kontaktiereinrichtung nach Anspruch 1, **dadurch gekennzeichnet, daß** das Gehäuse oder der Aufnahmekörper (6) stiftförmig ausgebildet ist und dessen querverlaufender Durchbruch als Einführöffnung (9) für die Breitseite (10) eines kartenförmigen Informationsträger (2) mit Smart-Card- bzw. Scheckkarten-Format dimensioniert ist.

3. Kontaktiereinrichtung nach Anspruch 1 oder 2, **dadurch gekennzeichnet, daß** die Einführöffnung (9) einen zugeführten Informationsträger (2) quer zu dessen Längserstreckung (11) vollumfänglich umgibt.

4. Kontaktiereinrichtung nach einem oder mehreren der vorhergehenden Ansprüche, **dadurch gekennzeichnet, daß** ein in Kontaktierungsposition versetzter Informationsträger (2) das Gehäuse oder den Aufnahmekörper (6) in dessen Querrichtung durchsetzt und im Ausgangsbereich des Durchbruches gegenüber der Außenbegrenzung (57) oder Mantelfläche des Gehäuses oder Aufnahmekörpers (6) vorspringt bzw. vorragt.

5. Kontaktiereinrichtung nach einem oder mehreren der vorhergehenden Ansprüche, **dadurch gekennzeichnet, daß** eine Breite des Durchbruches in etwa der Breite eines Informationsträgers (2) im normatisierten Format einer Smart-Card gemäß ISO 7816 entspricht.

6. Kontaktiereinrichtung nach einem oder mehreren der vorhergehenden Ansprüche, **dadurch gekennzeichnet, daß** eine Tiefe des Durchbruches durch das Gehäuse oder den Aufnahmekörper (6) weniger als 20 mm beträgt.

7. Kontaktiereinrichtung nach einem oder mehreren der vorhergehenden Ansprüche, **dadurch gekennzeichnet, daß** die Breite (8) des Gehäuses oder Aufnahmekörpers (6) kleiner bemessen ist als ein Abstand (32) zwischen der Breitseite (10) oder dem linken Rand eines kartenförmigen Informationsträgers (2) im Smart-Card-Format und der rechten Begrenzung (33) seiner Kontaktierungsflächen (5).

8. Kontaktiereinrichtung nach einem oder mehreren der vorhergehenden Ansprüche, **dadurch gekennzeichnet, daß** diese für eine Zuführung eines Informationsträgers (2) mit jener Breitseite (10) voran, welche dem integrierten Datenspeicherelement oder den Kontaktierungsflächen (5) am nächsten liegt, vorgesehen ist.

9. Kontaktiereinrichtung nach Anspruch 1, **dadurch gekennzeichnet, daß** der Aufnahmeschlitten (65) bei Einnahme der Ruhe- oder Ausgangsposition (27) weitgehendst innerhalb des Durchbruches angeordnet ist und über eine Führungsvorrichtung (69) aus dem Durchbruch ausstell- und wieder rückstellbar ist.

10. Kontaktiereinrichtung nach einem oder mehreren der vorhergehenden Ansprüche, **dadurch gekennzeichnet, daß** eine Länge des Anschlagelementes (34) weniger als 20 mm beträgt.

11. Kontaktiereinrichtung nach einem oder mehreren der vorhergehenden Ansprüche, **dadurch gekennzeichnet, daß** das gegenüber der Mantelfläche des Gehäuses oder Aufnahmekörpers (6) begrenzt verstellbar gelagerte Anschlagelement (34) der Begrenzungsvorrichtung (26) stetig in eine zum Gehäuse oder Aufnahmekörper (6) nächst- oder anliegende Stellung gedrängt ist.

12. Kontaktiereinrichtung nach einem oder mehreren der vorhergehenden Ansprüche, **dadurch gekennzeichnet, daß** dem Anschlagelement (34) wenigstens ein Federmittel (48; 72) zugeordnet ist, welches das Anschlagelement (34) in eine am Gehäuse oder Aufnahmekörper (6) anliegende oder zumindest teilweise in die Einführöffnung (9) eingezogene Ausgangsposition (27) drängt.

13. Kontaktiereinrichtung nach Anspruch 12, **dadurch gekennzeichnet, daß** das Federmittel (48; 72) das Anschlagelement (34) in die Ausgangsposition (27) verbringt, sobald ein in die Einführöffnung (9) eingeschobener Informationsträger (2) entfernt ist.

14. Kontaktiereinrichtung nach Anspruch 1, **dadurch gekennzeichnet, daß** das Positioniermittel (50) wenigstens ein Positionierelement (52) zur Positionierung des vergleichsweise kleinformatigen Informationsträgers (2) gegenüber der Kontaktvorrichtung (13) umfaßt.

15. Kontaktiereinrichtung nach Anspruch 14, **dadurch gekennzeichnet, daß** das Positionierelement (52) anschlagbegrenzt in eine Aktivstellung (28) verstellbar und in eine Ruhe- oder Ausgangsposition (27) selbsttätig rückstellend ausgebildet ist.

16. Kontaktiereinrichtung nach Anspruch 14 oder 15, **dadurch gekennzeichnet, daß** das Positionierelement (52) federelastisch nachgiebig gelagert und beim Einschieben eines großformatigen Informationsträgers (2) und Überschreiten einer vorbestimmten Einschubkraft in eine inaktive Stellung überführbar ist.

17. Kontaktiereinrichtung nach einem oder mehreren der Ansprüche 14 bis 16, **dadurch gekennzeichnet, daß** das Positionierelement (52) im Ausgangs- bzw. Ruhezustand eine ausgefahrene oder erhabene Stellung (62) einnimmt und durch Einschieben eines großformatigen Informationsträgers (2) mit entsprechend hoher Zuführkraft in eine inaktive, eingezogene oder umgelenkte Stellung überführbar ist.

18. Kontaktiereinrichtung nach einem oder mehreren der Ansprüche 14 bis 17, **dadurch gekennzeichnet, daß** das Positionierelement (52) zur manuellen und/oder mit der Zuführbewegung eines Informationsträgers (2) gekoppelten Verstellung in eine Aktivstellung (28) oder Ausgangsposition (27) ausgebildet ist.

19. Kontaktiereinrichtung nach einem oder mehreren der vorhergehenden Ansprüche, **dadurch gekennzeichnet, daß** das Gehäuse oder der Aufnahmekörper (6) als tragbarer Gegenstand für den persönlichen oder alltäglichen Gebrauch ausgebildet ist.

20. Kontaktiereinrichtung nach einem oder mehreren der vorhergehenden Ansprüche, **dadurch gekennzeichnet, daß** die Einführöffnung (9) oder der Einführschlitz im Gehäuse oder Aufnahmekörper (6) einen zu bearbeitenden Informationsträger (2) in den quer zur Zuführrichtung (12) verlaufenden Richtungen begrenzt und gegenüber der Kontaktiervorrichtung (13) im wesentlichen unverschiebbar positioniert.

21. Kontaktiereinrichtung nach einem oder mehreren der vorhergehenden Ansprüche, **dadurch gekennzeichnet, daß** an wenigstens einer Wandung der Einführöffnung (9) warzenförmige Erhebungen und/oder elastisch nachgiebige Kartenführungen angeordnet sind und die Kontaktelemente (14) federelastisch nachgiebig in die Einführöffnung (9) bzw. in den Durchbruch ragen.

22. Kontaktiereinrichtung nach einem oder mehreren der vorhergehenden Ansprüche, **dadurch gekennzeichnet, daß** diese in einer elektronischen Leseeinheit (39) zur Ausführung von Lese- und/oder Schreibvorgängen gegenüber dem elektronischen Datenspeicherelement eines zu verarbeitenden Informationsträgers (2) integriert ist.

23. Leseeinheit mit elektronischen Schaltkreisen zumindest zum Lesen von kartenförmigen Informationsträgern mit elektronischem Datenspeicherelement, **dadurch gekennzeichnet, daß** sie eine Kontaktiereinrichtung (1) nach einem oder mehreren der vorhergehenden Ansprüche aufweist.

24. Leseeinheit nach Anspruch 23, **dadurch gekennzeichnet, daß** diese stift- oder stabförmig ausgebildet ist.

25. Leseeinheit nach Anspruch 23 oder 24, **dadurch gekennzeichnet, daß** diese eine Anzeigeeinheit (75), beispielsweise ein LCD-Display (76) umfaßt.

26. Leseeinheit nach einem oder mehreren der Ansprüche 23 bis 25, **dadurch gekennzeichnet, daß** sie einen Haltebügel (84) zur Befestigung an Kleidertaschen oder dgl. aufweist.

27. Leseeinheit nach einem oder mehreren der Ansprüche 23 bis 26, **dadurch gekennzeichnet, daß** eine Schaltvorrichtung oder ein entsprechender Sensor zur Erfassung des Vorhandenseins eines Informationsträgers (2) und zur Steuerung der Energieversorgung der Leseeinheit (39) ausgebildet ist.

28. Leseeinheit nach einem oder mehreren der Ansprüche 23 bis 27, **dadurch gekennzeichnet, daß** diese elektrochemische Spannungsquellen (86), insbesondere Akkumulatoren (87) oder Batterien, zur autarken Stromversorgung umfaßt.

29. Leseeinheit nach Anspruch 28, **dadurch gekennzeichnet, daß** dieser eine Basisstation (77) zur Aufladung der Akkumulatoren (87) zuordenbar ist.

30. Leseeinheit nach Anspruch 28 oder 29, **dadurch gekennzeichnet, daß** eine Aufladung der Akkumulatoren (87) durch elektromagnetische Wechselfelder einer Sende- und/oder Empfangsvorrichtung (91) einer Basisstation (77) durchführbar ist.

## Claims

1. Contacting system (1) for card-shaped information carriers (2) provided with an electronic data memory element incorporating a contact interface with several electric contact surfaces (5), having a housing or a housing body (6) for at least partially accommodating or mounting a contact device (13) with several contact elements (14) arranged in a block or grid pattern which can be placed in contact with the contact surfaces (5) of an information carrier (2), and having at least one restricting mechanism (26) displaceable relative to the housing or housing body (6) incorporating at least one stop element (34) for edge regions of an insertable information carrier (2) to enable the contact surfaces (5) of an inserted information carrier (2) to be positioned relative to the contact elements (14) so as to establish a contact, a length (7) of the housing or housing body (6) being longer in size than a width dimension of an insertable card-shaped information carrier (2) in the format of a standardised smart card, and a slot-shaped insertion orifice (9) is provided in the form of an opening through the housing or housing body (6) for an information carrier (2) of this type which extends transversely to the longitudinal extension of the housing or housing body (6), **characterised in that** a width (8) of the housing or housing body (6) measured in the direction (12) in which such an information carrier (2) is inserted approximately corresponds to the extension (31) of the contact device (13) measured in the same direction or to the extension (31) of the contact surfaces (5) of such an information carrier (2) measured in the same direction when the restricting mechanism (26) is in the deactivated state and the stop element (34) is provided on a mounting carriage (65) for card-shaped information carriers (2) displaceable in the direction of the opening so that the stop element (34) can be displaced out of the orifice to a limited degree relative to an external boundary (57) or external surface of the housing or housing body (6) in the direction of the opening in the housing or housing body (6), and at least one positioning means (50) is provided in a support plane (60) for an information carrier (2) with a smart card format in order to position a relatively smaller card-shaped information carrier (2) with an electronic data memory element.

2. Contact system as claimed in claim 1, **characterised in that** the housing or housing body (6) is pen-shaped and its transversely extending opening is dimensioned to accommodate the width side (10) of a card-shaped information carrier (2) with a smart card or cheque card format.

3. Contacting system as claimed in claim 1 or 2, **characterised in that** the insertion orifice (9) surrounds the entire circumference of an inserted information carrier (2) transversely to its longitudinal extension (11).

4. Contacting system as claimed in one or more of the preceding claims, **characterised in that** an information carrier (2) offset in the contact position extends through the housing or the housing body (6) in the transverse direction thereof and protrudes or projects out forwards from the external boundary (57) or external surface of the housing or housing body (6) in the outlet region of the orifice.

5. Contacting system as claimed in one or more of the preceding claims, **characterised in that** a width of the opening approximately corresponds to the width of an information carrier (2) in the standardised format of a smart card as specified by ISO 7816.

6. Contacting system as claimed in one or more of the preceding claims, **characterised in that** a depth of the opening through the housing or the housing body (6) measures less than 20 mm.

7. Contacting system as claimed in one or more of the preceding claims, **characterised in that** the width (8) of the housing or housing body (6) is shorter in size than a distance (32) between the width side (10) or the left-hand edge of a card-shaped information carrier (2) in the smart card format and the right-hand boundary (33) of its contact surfaces (5).

8. Contacting system as claimed in one or more of the preceding claims, **characterised in that**, with a view to inserting an information carrier (2), it is designed with the width side (10) lying closest to the integrated data memory element or the contact surfaces (5) at the front.

9. Contacting system as claimed in claim 1, **characterised in that**, on assuming the non-operating or initial position (27), the mounting carriage (65) is disposed as far as possible inside the opening and can be moved out of and back into the opening by means of a guide mechanism (69).

10. Contacting system as claimed in one or more of the preceding claims, **characterised in that** a length of the stop element (34) measures less than 20 mm.

11. Contacting system as claimed in one or more of the preceding claims, **characterised in that** the stop element (34) of the restricting mechanism (26) mounted so as to be displaceable to a limited degree relative to the external face of the housing or housing body (6) is always forced into a position lying adjacent to or against the housing or housing body (6).

12. Contacting system as claimed in one or more of the preceding claims, **characterised in that** the stop element (34) co-operates with at least one spring means (48; 72), which forces the stop element (34) into an initial position (27) lying against the housing or housing body (6) or at least partially retracted in the insertion orifice (9).

13. Contacting system as claimed in claim 12, **characterised in that** the spring means (48; 72) moves the stop element (34) into the initial position (27) as soon as an information carrier (2) that was inserted in the insertion orifice (9) is removed.

14. Contacting system as claimed in claim 1, **characterised in that** the positioning means (50) comprises at least one positioning element (52) for positioning the relatively small-format information carrier (2) relative to the contact device (13).

15. Contacting system as claimed in claim 14, **characterised in that** the positioning element (52) is displaceable into an active position (28) restricted by stops and automatically returns to a non-operating or initial position (27).

16. Contacting system as claimed in claim 14 or 15, **characterised in that** the positioning element (52) is mounted so as to be resiliently flexible and can be switched into an inactive position when a large-format information carrier (2) is inserted and exceeds a predefined insertion force.

17. Contacting system as claimed in one or more of claims 14 to 16, **characterised in that** the positioning element (52) assumes an extended or projecting position (62) in the initial or non-operating state and can be switched to an inactive retracted or deflected position by inserting a large-format information carrier (2) with an appropriately strong insertion force.

18. Contacting system as claimed in one or more of claims 14 to 17, **characterised in that** the positioning element (52) is designed to be moved into an active position (28) or initial position (27) manually and/or by a displacement coupled with the insertion movement of an information carrier (2).

19. Contacting system as claimed in one or more of the preceding claims, **characterised in that** the housing or housing body (6) is designed as a portable object for personal or everyday use.

20. Contacting system as claimed in one or more of the preceding claims, **characterised in that** the insertion orifice (9) or the insertion slot in the housing or housing body (6) bounds an information carrier (2) to be processed in the directions extending transversely to the insertion direction (12) and positions it so as to be essentially immobile relative to the contact device (13).

21. Contacting system as claimed in one or more of the preceding claims, **characterised in that** wart-shaped raised areas and/or elastically flexible card guides are provided on at least one wall of the insertion orifice (9) and the contact elements (14) project into the insertion orifice (9) and through the opening in a resilient, flexible arrangement.

22. Contacting system as claimed in one or more of the preceding claims, **characterised in that** it is integrated in an electronic reading unit (39) for running reading and/or writing routines in conjunction with the electronic data memory element of an information carrier (2) to be processed.

23. Reading unit with electronic switch circuits for at least reading card-shaped information carriers with an electronic data memory element, **characterised in that** it has a contacting system (1) as claimed in one or more of the preceding claims.

24. Reading unit as claimed in claim 23, **characterised in that** it is pen-shaped or bar-shaped.

25. Reading unit as claimed in claim 23 or 24, **characterised in that** it has a display unit (75), for example a LCD display (76).

26. Reading unit as claimed in one of claims 23 to 25, **characterised in that** it has a holder strap (84) for attaching to pockets of clothing or similar.

27. Reading unit as claimed in one or more of claims 23 to 26, **characterised in that** a switch mechanism or an appropriate sensor is provided for detecting the presence of an information carrier (2) and for controlling the power supply of the reading unit (39).

28. Reading unit as claimed in one or more of claims 23 to 27, **characterised in that** it has electro-chemical voltage sources (86), in particular accumulators (87) or batteries, in order to provide an independent power supply.

29. Reading unit as claimed in claim 28, **characterised in that** it co-operates with a base station (77) for charging the accumulators (87).

30. Reading unit as claimed in claim 28 or 29, **characterised in that** the accumulators (87) can be charged by electromagnetic alternating fields of a transmitter and/or receiver device (91) of a base station (77).

## Revendications

1. Système de contact (1) pour supports d'informations (2) en forme de carte, lesquels sont dotés d'un élément électronique de stockage de données, qui comporte une interface dotée de contacts avec plusieurs surfaces de contact (5), comprenant un boîtier ou un corps de logement (6), pour le logement au moins partiel ou pour la fixation d'un dispositif de contact (13), avec plusieurs éléments de contact (14) disposés en bloc, respectivement à la manière d'une matrice, qui peuvent être mis en liaison par contact avec les surfaces de contact (5) d'un support d'informations (2) et avec au moins un dispositif de limitation (26) réglable par rapport au boîtier ou au corps de logement (6), qui comporte au moins un élément de butée (34) pour les zones d'arête d'un support d'informations (2) pouvant y être introduit, pour pouvoir positionner les surfaces de contact (5) d'un support d'informations (2) pouvant y être introduit, de manière à créer le contact par rapport aux éléments de contact (14), sachant qu'une longueur (7) du boîtier ou du corps de logement (6) est dimensionnée plus grande qu'une mesure en largeur d'un support d'informations (2) en forme de carte dans le format d'une smart-card standardisée pouvant y être introduit, et sachant qu'une ouverture d'introduction (9) en forme de fente est pratiquée pour un tel support d'informations (2) comme traversée à travers le boîtier ou le corps de logement (6), laquelle s'étend transversalement par rapport à l'extension longitudinale du boîtier ou du corps de logement (6), **caractérisé en ce qu'**une largeur (8) du boîtier ou du corps de logement (6) mesurée dans la direction de l'introduction (12) d'un tel support d'informations (2) correspond dans l'état désactivé du dispositif de limitation (26) à peu près à l'extension (31), mesurée dans la même direction, du dispositif de contact (13) ou à peu près à l'extension (31), mesurée dans la même direction, des surfaces de contact (5) d'un tel support d'informations (2), et **en ce que** l'élément de butée (34) est configuré sur un traîneau de logement (65), pour des supports d'informations (2) en forme de cartes, mobile dans la direction de la traversée, de telle sorte que l'élément de butée (34) sortant de la traversée est réglable dans une mesure limitée par rapport à une limitation extérieure (57) ou à une surface enveloppe du boîtier ou du corps de logement (6), dans la direction de la traversée dans le boîtier ou dans le corps de logement (6), et que dans un plan de positionnement (60) pour un support d'informations (2) du format smart-card, au moins un moyen de positionnement (50) est configuré pour le positionnement d'un support d'informations (2) en forme de carte, en comparaison plus petit, avec un élément électronique de stockage de données.

2. Système de contact selon la revendication 1, **caractérisé en ce que** le boîtier ou le corps de logement (6) est configuré en forme de crayon et **en ce que** sa traversé s'étendant transversalement est dimensionnée comme ouverture d'introduction (9) pour le côté large (10) d'un support d'informations (2) en forme de carte du format smart-card, respectivement carte de chèque.

3. Système de contact selon la revendication 1 ou 2, **caractérisé en ce que** l'ouverture d'introduction (9) entoure un support d'informations (2) introduit sur toute sa périphérie, transversalement à son extension longitudinale (11).

4. Système de contact selon une ou plusieurs des revendications précédentes, **caractérisé en ce qu'**un support d'informations (2) placé en position de contact traverse le boîtier ou le corps de logement (6) dans sa direction transversale et dépasse, respectivement saille dans la zone de sortie de la traversée par rapport à la limitation extérieure (57) ou à la surface d'enveloppe du boîtier ou du corps de logement (6).

5. Système de contact selon une ou plusieurs des revendications précédentes, **caractérisé en ce qu'**une largeur de la traversée correspond à peu près à la largeur d'un support d'informations (2) du format normalisé d'une smart-card conformément à ISO 7816.

6. Système de contact selon une ou plusieurs des revendications précédentes, **caractérisé en ce qu'**une profondeur de la traversée à travers le boîtier ou le corps de logement (6) est de moins de 20 mm.

7. Système de contact selon une ou plusieurs des revendications précédentes, **caractérisé en ce que** la largeur (8) du boîtier ou du corps de logement (6) est dimensionnée plus petite que la distance (32) entre le côté large (10) ou le bord gauche d'un support d'informations (2) en forme de carte du format smart-card et la limitation droite (33) des ses surfaces de contact (5).

8. Système de contact selon une ou plusieurs des revendications précédentes, **caractérisé en ce que** ce dernier est prévu pour une amenée d'un support d'informations (2) avec celui des côtés larges (10) en premier, qui est le plus proche de l'élément intégré de stockage des données ou des surfaces de contact (5).

9. Système de contact selon la revendication 1, **caractérisé en ce que** le traîneau de logement (65), quand il prend la position de repos ou initiale (27), est disposé dans une très large mesure à l'intérieur de la traversée et peut être déployé et de nouveau rétracté depuis la traversée par l'intermédiaire d'un dispositif de guidage (69).

10. Système de contact selon une ou plusieurs des revendications précédentes, **caractérisé en ce qu'**une longueur de l'élément de butée (34) est de moins de 20 mm.

11. Système de contact selon une ou plusieurs des revendications précédentes, **caractérisé en ce que** l'élément de butée (34) du dispositif de limitation (26), monté de façon réglable dans une mesure limitée par rapport à la surface d'enveloppe du boîtier ou du corps de logement (6), est constamment forcé dans une position proche du boîtier ou du corps de logement (6) ou en contact avec celui-ci.

12. Système de contact selon une ou plusieurs des revendications précédentes, **caractérisé en ce qu'**à l'élément de butée (34) est affecté au moins un moyen faisant ressort (48, 72), lequel force l'élément de butée (34) dans une position initiale (27) appuyée contre le boîtier ou le corps de logement (6) ou au moins rétractée en partie dans l'ouverture d'introduction (9).

13. Système de contact selon la revendication 12, **caractérisé en ce que** le moyen faisant ressort (48, 72) amène l'élément de butée (34) dans la position initiale (27) dès qu'un support d'informations (2) glissé dans l'ouverture d'introduction (9) est retiré.

14. Système de contact selon la revendication 1, **caractérisé en ce que** le moyen de positionnement (50) comprend au moins un élément de positionnement (52) pour le positionnement du support d'informations (2) de format relativement petit par rapport au dispositif de contact (13).

15. Système de contact selon la revendication 14, **caractérisé en ce que** l'élément de positionnement (52) est configuré de façon à pouvoir être déplacé de façon limitée par une butée dans une position active (28) et à retourner de lui-même dans une position de repos ou initiale (27).

16. Système de contact selon la revendication 14 ou 15, **caractérisé en ce que** l'élément de positionnement (52) est monté de façon flexible, élastique à la manière d'un ressort, et **en ce que**, lors de l'introduction d'un support d'informations (2) de grand format et du dépassement d'une force d'introduction prédéterminée, il peut être amené dans une position inactive.

17. Système de contact selon une ou plusieurs des revendications 14 à 16, **caractérisé en ce que** l'élément de positionnement (52) prend dans l'état initial, respectivement de repos, une position déployée ou en saillie (62) et, par l'introduction du support d'informations (2) de grand format avec une force d'introduction élevée correspondante, peut être amené dans une position inactive, rétractée ou déviée.

18. Système de contact selon une ou plusieurs des revendications 14 à 17, **caractérisé en ce que** l'élément de positionnement (52) est configuré pour le déplacement manuel et/ou couplé avec le mouvement d'introduction d'un support d'informations (2), dans une position active (28) ou dans la position initiale (27).

19. Système de contact selon une ou plusieurs des revendications précédentes, **caractérisé en ce que** le boîtier ou le corps de logement (6) est configuré comme objet portable pour l'utilisation personnelle ou quotidienne.

20. Système de contact selon une ou plusieurs des revendications précédentes, **caractérisé en ce que** l'ouverture d'introduction (9) ou la fente d'introduction dans le boîtier ou le corps de logement (6) limite un support d'informations (2) à traiter dans les directions s'étendant transversalement par rapport à la direction de l'introduction (12) et le positionne de manière essentiellement indécalable par rapport au dispositif de contact (13).

21. Système de contact selon une ou plusieurs des revendications précédentes, **caractérisé en ce que** des saillies en forme de bouton et/ou des guides de carte élastiquement flexibles sont disposés sur au moins une paroi de l'ouverture d'introduction (9) et **en ce que** les éléments de contact (14) dépassent de façon flexible, élastique à la manière d'un ressort, dans l'ouverture d'introduction (9), respectivement dans la traversée.

22. Système de contact selon une ou plusieurs des revendications précédentes, **caractérisé en ce que** ce dernier est intégré dans une unité de lecture (39) pour l'exécution de processus de lecture et/ou d'écriture par rapport à l'élément électronique de stockage des données d'un support d'informations (2) à traiter.

23. Unité de lecture avec des circuits électroniques, au moins pour la lecture de supports d'informations en forme de cartes avec un élément électronique de stockage des données, **caractérisée en ce qu'**elle comporte un système de contact (1) selon une ou plusieurs des revendications précédentes.

24. Unité de lecture selon la revendication 23, **caractérisée en ce qu'**elle est configurée en forme de crayon ou de bâtonnet.

25. Unité de lecture selon la revendication 23 ou 24, **caractérisée en ce que** celle-ci comprend une unité d'affichage (75), par exemple un afficheur à LCD (76).

26. Unité de lecture selon une ou plusieurs des revendications 23 à 25, **caractérisée en ce qu'**elle comporte un étrier de maintien (84) pour la fixation sur la poche d'un vêtement ou similaire.

27. Unité de lecture selon une ou plusieurs des revendications 23 à 26, **caractérisée en ce qu'**un dispositif de commutation ou un détecteur correspondant est configuré pour la détection de la présence d'un support d'informations (2) et pour la commande de l'alimentation en énergie de l'unité de lecture (39).

28. Unité de lecture selon une ou plusieurs des revendications 23 à 27, **caractérisée en ce que** cette dernière comprend des sources électrochimiques de tension (86), en particulier des accumulateurs (87) ou des piles, pour une alimentation en courant autarcique.

29. Unité de lecture selon la revendication 28, **caractérisée en ce qu'**une station de base (77) pour la recharge des accumulateurs (87) peut être affectée à cette dernière.

30. Unité de lecture selon la revendication 28 ou 29, **caractérisée en ce qu'**une recharge des accumulateurs (87) peut être effectuée par des champs électromagnétiques alternés d'un dispositif d'émission et/ou de réception (91) d'une station de base (77).
